# EUROPEAN PATENT SPECIFICATION

(11) **EP 2 058 809 B1**
(45) Date of publication and mention of the grant of the patent: **29.06.2011**
(21) Application number: 06797169.7
(22) Date of filing: 31.08.2006
(51) Int. Cl.: G11B 7/26

(54) **PHOTOCURABLE TRANSFER SHEET, PROCESS FOR PRODUCING OPTICAL INFORMATION RECORDING MEDIUM USING THE SAME, AND OPTICAL INFORMATION RECORDING MEDIUM**
LICHTAUSHÄRTBARES TRANSFERBLATT, PROZESS ZUR HERSTELLUNG EINES OPTISCHEN INFORMATIONSAUFZEICHNUNGSMEDIUMS DAMIT UND OPTISCHES INFORMATIONSAUFZEICHNUNGSMEDIUM
FEUILLE DE TRANSFERT PHOTODURCISSABLE, PROCEDE DE PRODUCTION D'UN SUPPORT D'ENREGISTREMENT D'INFORMATIONS OPTIQUE UTILISANT CETTE FEUILLE, ET SUPPORT D'ENREGISTREMENT D'INFORMATIONS OPTIQUE

(43) Date of publication of application: 13.05.2009
(73) Proprietor: Bridgestone Corporation, Tokyo 104-0031 (JP)
(72) Inventor: KITANO, Hideki, Kodaira-Shi Tokyo 187-8531 (JP); INAMIYA, Takato, Kodaira-Shi Tokyo 187-8531 (JP); MURAYAMA, Kenji, Kodaira-Shi Tokyo 187-8531 (JP); KOTSUBO, Hidefumi, Kodaira-Shi Tokyo 187-8531 (JP)
(74) Representative: Oxley, Robin John George
(86) International application number: PCT/JP2006/317209
(87) International publication number: WO 2008/026279

(56) References cited:
- EP-A- 1 437 726
- EP-A- 1 674 505
- JP-A- 2005 182 963
- JP-A- 2005 182 964
- JP-A- 2005 182 971

## Description

### Background of Invention

### 1. Field of the invention

The present invention relates to an optical information recording medium, such as DVD (Digital Versatile Disc) or CD (Compact Disc), in which a large amount of information such as letters, sound and animation is recorded and/or recordable as digital signals, a process for the preparation thereof, and further a photo-curable transfer sheet advantageously utilized in the medium and process.

### 2. Description of the Related Art

As an optical information recording medium in which digital signals are in advance recorded by forming pits on its surface, CD and CD-ROM are widely used. Recently, DVD that the animation can be recorded and/or is recorded by forming pits on its both (double) sides has been noted as the next generation recording medium instead of CD and increasingly used. Further, recordable discs such as CD-R, DVD-R and DVD-RW having groove(s) or grooves and pits thereon have been also increasingly used.

Conventional DVD having recording layers (surfaces) on its both sides includes, for example, a disc readable from double sides in which each of reflective layers is formed on a signal-pits surface of each of transparent resin substrates having the signal-pits surface on its one side, and the two transparent resin substrates are bonded to each other through an adhesive layer such that the reflective layers are faced to each other; and a disc readable from single side in which a semitransparent reflective layer is formed on a signal-pits surface of a transparent resin substrate while a reflective layer is formed on a signal-pits surface of another transparent resin substrate and the two transparent resin substrates are bonded to each other through an adhesive layer such that the semitransparent reflective layer and the reflective layer are faced to each other.

The DVD readable from double sides can be prepared, for example, by subjecting melted polycarbonate resin to injection molding by the use of a stamper having unevenness (concave and convex) corresponding to the reverse of unevenness of the signal-pits to be recorded on the substrate to prepare a transparent resin substrate having unevenness on its surface, forming a reflective layer on the uneven surface by spattering metal such as aluminum on it, and bonding two transparent resin substrates obtained in the above manner to each other through an adhesive such that the two reflective layers are faced to each other.

For example, a standardized specification of a next generation optical disc "Blu-Ray Disc" was proposed on February 10, 2002. The specification mainly includes storage capacity of 23.3/25/27GB, laser wavelength of 405nm (violaceous laser), lens numerical aperture (N/A) of 0.85, disc diameter of 120mm, disc thickness of 1.2mm and track pitch of 0.32µm.

In the Blu-Ray Disc, as mentioned above, the sizes of groove and pits are reduced, and therefore it is required to reduce a spot size of a reading laser. The reduction of the spot size results in that the reading is apt to be influenced by inclination of the disc, and hence even DVD having a little warpage cannot be reproduced (read out). In order to avoid the disadvantage, it may be effective to reduce a thickness of a substrate and make a thickness of a cover layer provided on pits surface on a laser-irradiation side to approx. 0.1 mm.

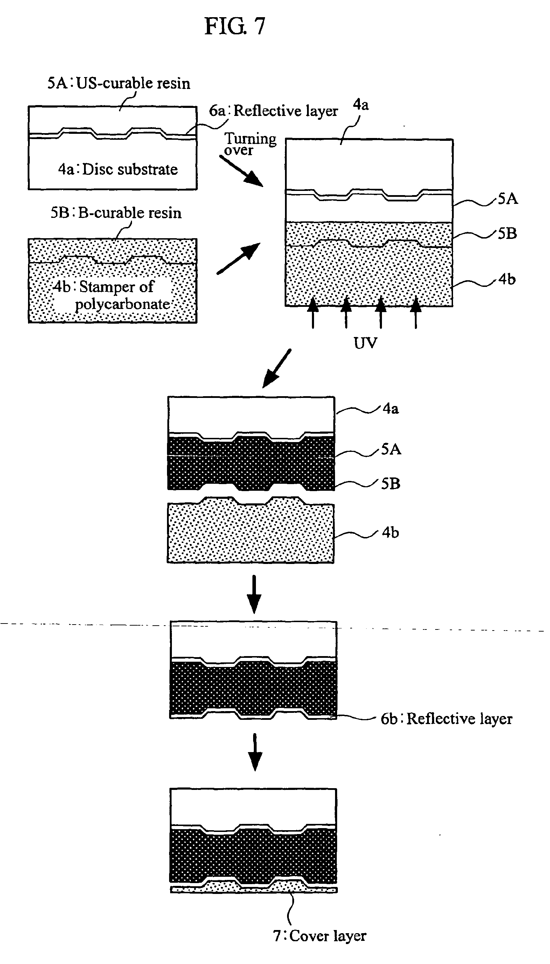

Nonpatent Document 1 (pp. 68) describes a process for the preparation of DVD suited to the above-mentioned requirements. The process is explained by referring to Fig. 7. A UV curable resin 5A is provided, by application, on a reflective layer (or recording layer) 6a of a disc substrate (1.1mm) 4a having the reflective layer on its uneven surface, while a UV curable resin 5B is provided, by application, on a stamper 4b made of polycarbonate having uneven surface. Subsequently, after the substrate is turned over, the turned-over substrate and the stamper are put together, and the UV curable resins 5A, 5B are cured by irradiating ultraviolet beam from the stamper side. The stamper 4b is then removed from the cured UV curable resin 5B, a reflective layer (or recording layer) 6b is formed on the uneven surface and further a cover layer (thickness of approx. 0.1mm) 7 is provided the reflective layer 6b.

In the process described in Nonpatent Document 1, a UV curable resin (layer) is provided on a disc substrate and a stamper by application, and the substrate is turned over and bonded to the stumper. Hence, the process is needed to perform complicated procedures including the application and turning over steps. In more detail, when the turned-over substrate and the stamper are put together through viscous UV curable resins, bubbles are generated in the vicinity of an interface of the combined UV curable resins. Hence it is difficult to successfully bond the UV curable resins of the substrate and stamper to each other. Furthermore, the UV curable resin is accompanied by large shrinkage on its curing, and hence the resultant medium is apt to have deformation such as warpage.

A process for the preparation of an optical information recording medium such as DVD capable of solving the above disadvantages is disclosed in Patent Document 1 (JP2003-272244 A). In the process, used is a photo-curable transfer sheet having a photo-curable transfer layer comprising a photo-curable composition, the photo-curable composition being deformable by application of pressure and containing a reactive polymer having a photopolymerizable functional group. In more detail, the photo-curable transfer sheet in the form of solid instead of the above UV curable resin is used when depression of the stamper, and therefore it is possible to transfer the uneven surface into the sheet to avoid the above disadvantages.

Further, Patent Document 2 (JP08-235644 A) describes a process comprising depressing a master plate (stamper) on a sheet-shaped photo curable polymer material (photo-curable transfer sheet) for forming an intermediate layer, and thereafter light-curing the material to peel the master plate, and then forming an intermediate layer having uneven surface. The resultant intermediate layer has little thickness irregularity.

Patent Document 1: JP2003-272244 A
Patent Document 2: JP08-235644 A
Nonpatent Document 1: "NIKKEI ELECTRONICS", November 5, 2001, pp.68. EP 1674505 also dislcoses a photocuring transfer sheet for preparing an optical recording medium.

### Brief Summary of the Invention

### Problem to be solved by the invention

According to the study of the present inventors, the use of the photo-curable transfer sheet brings about improvement of warpage and thickness irregularity of an optical information recording medium. However, it has been revealed that when a stamper (master plate) is depressed on the photo-curable transfer sheet, cured by light and peeled, a part of the cured transfer layer of the sheet is possibly peeled from the reflective layer to adhere to the stamper. Such peeling of the cured transfer layer damages an uneven (concavo-convex) surface of the cured transfer layer as a recorded side, and hence signals recorded on the uneven surface cannot accurately read out by a laser beam. It is considered that the peeling of the cured transfer layer is due to insufficient adhesion between the transfer layer and the reflective layer.

An object of the present invention is to provide a photo-curable transfer sheet by which an optical information recording medium (e.g., DVD) having small thickness and high capacity can be advantageously prepared, the photo-curable transfer layer of the sheet cured in the preparation of the optical information recording medium having excellent adhesion to the reflective layer such as silver alloy and easy peeling property from the stamper to easily bring about the transfer layer having an uneven surface such as pits, etc accurately formed along an uneven surface of the stamper.

Another object of the present invention is to provide a photo-curable transfer sheet by which an optical information recording medium (e.g., DVD) having small thickness and high capacity can be advantageously prepared, the photo-curable transfer layer of the sheet in preparation of the optical information recording medium having excellent transferring property (of pits etc) and curing property, and the cured photo-curable transfer layer having excellent adhesion to the reflective layer such as silver alloy and easy peeling property from the stamper to easily bring about the transfer layer having an uneven surface such as pits, etc accurately formed along an uneven surface of the stamper.

Further, an object of the present invention is to provide a process for the preparation of an optical information recording medium which has the transfer layer having an accurate uneven surface such as pits, etc, and is almost free from error in reading.

Furthermore, an object of the present invention is to provide an optical information recording medium which has the transfer layer having an accurate uneven surface such as pits, etc, and is almost free from error in reading.

### Means for Solving Problem

The above-mentioned object can be attained by a photo-curable transfer sheet having a photo-curable transfer layer comprising a photo-curable composition deformable by application of pressure, wherein the photo-curable composition comprises a polymer and a reactive diluent having a photopolymerizable functional group, and the reactive diluent is a compound represented by the following formula (I): 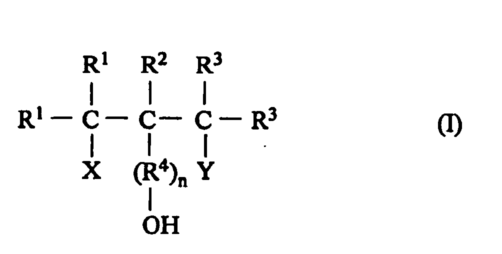 in which R¹ represents a hydrogen atom or an alkyl group having 1 to 5 carbon atoms and R¹ may be different from each other,
R² represents a hydrogen atom, an alkyl group having 1 to 5 carbon atoms or a hydroxyalkyl group having 1 to 5 carbon atoms,
R³ represents a hydrogen atom or an alkyl group having 1 to 5 carbon atoms and R³ may be different from each other,
R⁴ represents an alkylene group having 1 to 5 carbon atoms,
X and Y independently represent an acryloyl group or a methacryloyl group, and n is 0 or 1.

The preferred embodiments of the photo-curable transfer sheet according to the present invention are as follows:

1) In case the transfer layer of the photo-curable transfer sheet contains the compound (I), the cured transfer layer adhering to the stamper shows excellent adhesion to the reflective layer such as silver alloys (e.g., AgX in which X is preferably Cu·Pd or Cu·Nd) and easy peeling property from the stamper, and therefore a part of the cured transfer layer is scarcely peeled from the reflective layer to adhere to the stamper. Thus the recorded surface of the cured transfer layer can be read out without error because the recorded surface precisely along an uneven surface of the stamper is precisely left on the reflective layer.

2) In the formula (I),
R¹ represents a hydrogen atom,
R² represents a hydrogen atom, a methyl group, an ethyl group or a hydroxymethyl group,
R³ represents a hydrogen atom,
R⁴ represents a methylene group,
X and Y each represent independently an acryloyl group or a methacryloyl group, and
n is 0 or 1.

Particularly, the above embodiment brings about excellent adhesion to the reflective layer and easy peeling property from the stamper.

3) In the formula (I),
R¹ represents a hydrogen atom,
R² represents a hydrogen atom,
R³ represents a hydrogen atom,
X and Y each represent independently an acryloyl group or a methacryloyl group, and
n is 0.
Particularly, the above embodiment brings about excellent adhesion to the reflective layer and easy peeling property from the stamper.

4) The photo-curable transfer layer having been subjected to ultraviolet exposure of 300 mJ/cm² has a glass transition temperature of not less than 65°C. A rapid ultraviolet exposure easily prevents sagging of the transfer layer in the form of pits and the like, the sagging being apt to occur due to residual stress generated by the transferring, to maintain the transferred shape of pits.

5) The photo-curable composition has a glass transition temperature of less than 20°C. Excellent transferring property can be obtained.

6) The polymer has a glass transition temperature of not less than 80°C, and the polymer is preferably acrylic resin.

7) The acrylic resin has at least 50% by weight of recurring unit of methyl methacrylate. An appropriate combination of the acrylic resin with the reactive diluent brings about both excellent transferring property and curing property.

8) The acrylic resin has a photopolymerizable functional group.

9) The acrylic resin is a copolymer of methyl methacrylate, at least one alkyl (meth)acrylate whose alkyl has 2 to 10 carbon atoms and glycidyl (meth)acrylate, the glycidyl group being reacted with carboxylic acid having a photopolymerizable functional group. An appropriate combination of the acrylic resin with the reactive diluent brings about both excellent transferring property and curing property.

10) The acrylic resin is a copolymer of methyl methacrylate, at least one alkyl (meth)acrylate whose alkyl has 2 to 10 carbon atoms and carboxylic acid having a photopolymerizable functional group, a carboxyl group of the carboxylic acid being reacted with glycidyl (meth)acrylate. An appropriate combination of the acrylic resin with the reactive diluent brings about both excellent transferring property and curing property.

11) The acrylic resin has a hydroxyl group.

12) The acrylic resin is a copolymer of methyl methacrylate, at least one alkyl (meth)acrylate whose alkyl has 2 to 10 carbon atoms and at least one hydroxyalkyl (meth)acrylate whose hydroxyalkyl has 2 to 4 carbon atoms. An appropriate combination of the acrylic resin with the reactive diluent brings about both excellent transferring property and curing property.

13) The photo-curable composition further contains polyisocyanate, preferably diisocyanate. Post-crosslinking (after-crosslinking) before light curing can be carried out to enhance shape-maintaining property.

14) The polymer having a glass transition temperature of not less than 80°C has weight average molecular weight of not less than 100,000 and/or number average molecular weight of not less than 100,000. Particularly, weight average molecular weight of 100,000 to 300,000 and number average molecular weight of 100,000 to 300,000 are preferred. By appropriate combination between this molecular weight, composition of acrylic resin and ratio of reactive diluent as described later, specifically excellent transferring property and curing property can be obtained.

15) The photo-curable composition contains 0.1 to 10% by weight of a photopolymerization initiator.

16) The photo-curable transfer sheet has light transmittance of not less than 70% in the range of wavelengths of 380 to 420nm.

17) The photo-curable transfer sheet has light transmittance of not less than 70% in the range of wavelengths of 380 to 800nm.

18) The photo-curable transfer layer has a thickness of 5 to 300µm.

19) A release sheet is provided on one side or both sides of the photo-curable transfer layer.

20) The photo-curable transfer sheet is in the form of continuous length, and has the approximately same width as the release sheet.

The present invention is provided by a process for the preparation of an optical information recording medium comprising of the steps (2) to (4):
a step (2) of removing the release sheet on one side of the photo-curable transfer sheet as mentioned above, in case the photo-curable transfer sheet has the release sheets on the both sides,
a step (3) of placing the photo-curable transfer sheet on an uneven surface of a reflective layer, such that the photo-curable transfer layer is in contact with the uneven surface, the reflective layer being formed on an uneven surface of a substrate having the uneven surface of recorded pits and/or grooves, and depressing the photo-curable transfer sheet and the substrate to form a laminate in which the one side of the photo-curable transfer sheet adheres closely to the uneven surface of the reflective layer, and
a step (4) of removing the release sheet on the other side of the photo-curable transfer layer of the laminate.

The preferred embodiments of the process according to the present invention are as follows:

1) Prior to the step (2), the following step (1) is performed:
a step (1) of punching out a disc from the photo-curable transfer sheet, or
a step (1) of punching out a disc comprising the photo-curable transfer layer and the release sheet on one side of the photo-curable transfer sheet from the photo-curable transfer sheet without punching out the other side release sheet.

2) After the step (4), the following steps (5) and (6) are performed:
a step (5) of placing an uneven surface of a stamper having the uneven surface of recorded pits and/or grooves on the surface having no release sheet of the laminate, and depressing the photo-curable transfer sheet and the stamper to form a laminate in which the surface of the photo-curable transfer layer adheres closely to the uneven surface of the stamper, and
a step (6) of exposing the laminate having the stamper to ultraviolet rays to cure the photo-curable transfer layer, and removing the stamper from the laminate to form an uneven surface on the photo-curable transfer layer.

3) The ultraviolet exposure of the step (6) is carried out in irradiation energy of 300 mJ/cm². A rapid curing can be carried out.

4) The photo-curable transfer layer obtained after the step (6) has a glass transition temperature of not less than 65°C.

5) After steps (5) and (6), the following step (7) is performed:
a step (7) of forming a reflective layer on the uneven surface of the photo-curable transfer layer.

Further, the present invention is provided by an optical information recording medium obtainable by the process as mentioned above.

In more detail, the optical information recording medium comprises a substrate having an uneven surface of recorded pits and/or grooves, a reflective layer (including a semi-transparent reflective layer) formed along the uneven surface of the substrate, and a cured layer of a photo-curable composition formed along the uneven surface of the reflective layer, wherein the photo-curable composition is the composition of the above-mentioned photo-curable transfer sheet.

### Effect of the invention

The photo-curable transfer sheet of the invention is advantageous for the preparation of an optical information recording medium (e.g., DVD) having small thickness and high capacity, and the photo-curable transfer layer of the sheet cured in the preparation of the optical information recording medium has excellent adhesion to the reflective layer such as silver alloy and easy peeling property from the stamper to easily bring about the transfer layer having an uneven surface such as pits, etc precisely formed along an uneven surface of the stamper. Therefore, a part of the cured transfer layer is not peeled from the reflective layer such as silver alloy, and does not adhere to the stamper, and hence the cured transfer layer is left on the reflective layer such that the uneven surface of the cured transfer layer precisely corresponds to that of the stamper. Accordingly, the resultant optical information medium is almost free from error in reading when it is read out by a laser beam. Thus use of the photo-curable transfer sheet brings about the rapid preparation of the optical information medium having high accuracy.

Particularly, in case the specific polymer having a glass transition temperature of not less than 80°C and the reactive diluent of the invention are combined, even use of a continuous photo-curable transfer sheet in the form of roll brings about no exudation of the gradients of the transfer layer and no fluctuation of the thickness of the sheet. Therefore the photo-curable transfer sheet shows excellent workability. Further, the photo-curable transfer sheet containing diisocyanate shows more excellent workability because of its post-curing.

### Brief Description of the Drawings

Fig. 1 is a section view showing an example of an embodiment of the photo-curable transfer sheet of the present invention.
Fig. 2 is a section view showing an example of a process for preparing the optical information recording medium of the present invention.
Fig. 3 is a section view showing an example of the optical information recording medium of the present invention.
Fig. 4 is a section view showing another example of the optical information recording medium of the present invention.
Fig. 5 is a schematic view for explaining a depressing method using a device according to a double vacuum chamber system.
Fig. 6 is a graph used in the determination of glass transition temperature (Tg).
Fig. 7 is a section view showing the procedure for a process for the preparation of an optical information recording medium described in NIKKEI ELECTRONICS.

### Explanation of reference numbers

- 11:: Photo-curable transfer layer
- 12a, 12b:: Release sheet
- 21:: Substrate
- 23a, 23b, 23c, 23d:: Reflective layer
- 11a, 11b, 11c:: Cured photo-curable transfer layer
- 24:: Stamper
- 26:: Organic polymer film (cover layer)

### Detailed Description of the Invention

Embodiments of the invention are explained in detail by referring to drawings.

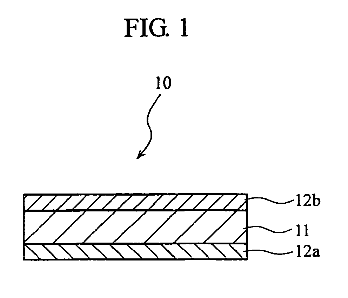

Fig. 1 is a section view showing an example of an embodiment of the photo-curable transfer sheet 10 of the present invention. A photo-curable transfer layer 11 has a release sheet 12a, 12b on both sides of the layer 11. The release sheet 12a, 12b may be provided on one side of the layer 11. Otherwise the release sheet 12a, 12b may be not provided. The provision way of the release sheet can be selected depending upon the uses.

The photo-curable transfer layer 11 is easily deformable by application of pressure such that unevenness of a stamper can be precisely transferred to the layer by depressing the stamper and the layer, and at the same time shows excellent adhesion to the reflective layer such as silver alloy and easy peeling property from the stamper after curing of the transfer layer. In more detail, the photo-curable transfer layer 11 is composed of a photo-curable composition, which includes a polymer and a reactive diluent having a photopolymerizable functional group. The reactive diluent includes a compound at least one hydroxyl group and an acryloyl group and/or methacryloyl group, the total of acryloyl group and/or methacryloyl group being at least two. Hence the compound has at least two acryloyl groups, or at least two methacryloyl groups, or at least one acryloyl group and at least one methacryloyl group. By using the specific reactive diluent (the compound), the cured transfer layer of the transfer sheet adhering to the stamper highly adheres to the reflective layer such as silver alloy [AgX, preferably Ag·Cu·Pd (97.4:0.9:1.7 ratio by weight; for example APC available from Furuya Metal Co., Ltd.) or Ag·Cu·Nd (98.4:0.7:0.9 ratio by weight; for example ANC available from Kobelco Research Institute, Inc.)], and at the same time the surface of the cured transfer layer becomes easily peelable from the stamper (generally made of nickel). Particularly, it is considered that the adhesion of the cured transfer layer to the reflective layer is extremely enhanced compared with that to the stamper, and affinity of the cured transfer layer to the stamper is reduced. Otherwise affinity of the cured transfer layer to the stamper is considered to be reduced by the curing.

The photo-curable composition of the invention preferably include a polymer having glass transition temperature (Tg) of not less than 80°C as a polymer, whereby the uneven shape of the stamper or substrate can be easily transferred to the transfer layer, and subsequent curing can be rapidly carried out. Further the shape formed by the curing is maintained for a long time without change of the shape due to its high Tg. The polymer preferably has a photopolymerizable functional group because it can be reacted with the reactive diluent to enhance the curing rate. The polymer preferably has hydroxyl group because the transfer layer can be a little cured by use of diisocyanate whereby exudation of the gradient of the layer and variation of the thickness are greatly repressed. The use of the diisocyanate is effective to some extend even if the polymer has no hydroxy group.

In the photo-curable transfer sheet, the photo-curable transfer layer preferably has a light transmittance of not less than 70% in a wavelength rang of 380 to 420nm so as to easily read out information from the uneven surface of the sheet with a reading laser beam for the purpose of density growth of information. The light transmittance in a wavelength rang of 380 to 420nm is especially preferred not less than 80%. Thus, the optical information recording medium of the invention prepared by using the photo-curable transfer layer is advantageously used in a method of reading out information from pit signals using a laser beam of wavelength of 380 to 420nm.

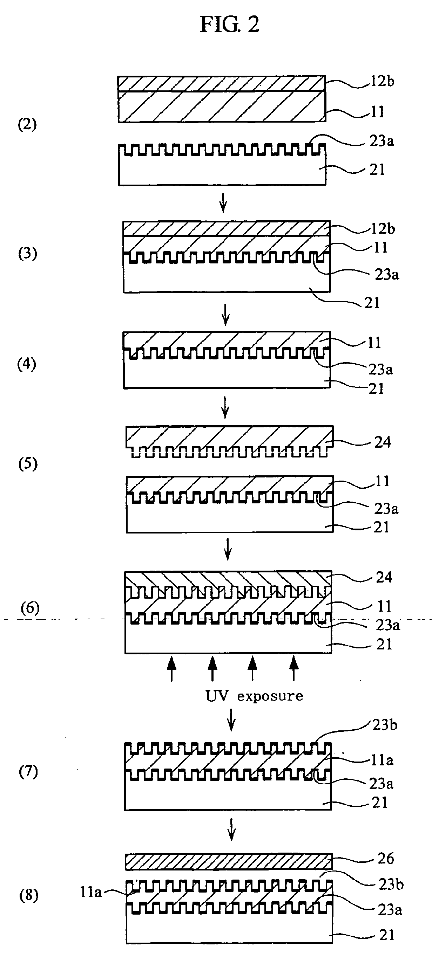

The optical information recording medium can be prepared using the above photo-curable transfer sheet 10, for example, as shown in Fig. 2.

A disc (generally doughnut form) is punched out from the photo-curable transfer sheet 10 (step 1). In this case, there are two methods for punching out; i.e., a method of punching out a disc comprising the photo-curable transfer layer 11 and the both sides release sheets 12a and 12b from the photo-curable transfer sheet, and a method of punching out a disc comprising the photo-curable transfer layer 11 and the one side release sheet 12b from the photo-curable transfer sheet without punching out the other side release sheet 12a. The former is generally referred to as full edge and the latter as dry edge, and these are expediently selected. Such punching process can be performed by using the photo-curable transfer sheet 10 without occurrence of exudation or protrusion of the transfer layer and with good workability.

Subsequently, the release sheet 12a is removed from the photo-curable transfer sheet 10, and the photo-curable transfer layer 11 provided with the release sheet 12b is prepared (step 2). The photo-curable transfer sheet 10 is depressed on an uneven surface of a half-transparent reflective layer 23a, the reflective layer 23a being formed on an uneven surface of a substrate 21 having the uneven surface of recorded pits and/or grooves, such that the surface having no release layer of the photo-curable transfer layer 11 faces the uneven surface of the reflective layer 23a (step 3). The half-transparent reflective layer 23a generally is a reflective layer having relatively low reflectivity and comprising AgX, etc. Hence, a laminate in which the one side of the photo-curable transfer sheet 10 adheres closely to the uneven surface of the reflective layer 23a is formed, the laminate comprising the photo-curable transfer layer 11, reflective layer 23a and substrate 21. In case this structure (laminate) is used as an optical disc, the photo-curable transfer layer 11 is exposed to UV (ultraviolet ray) to be cured, and then the release sheet 12b is removed from the laminate.

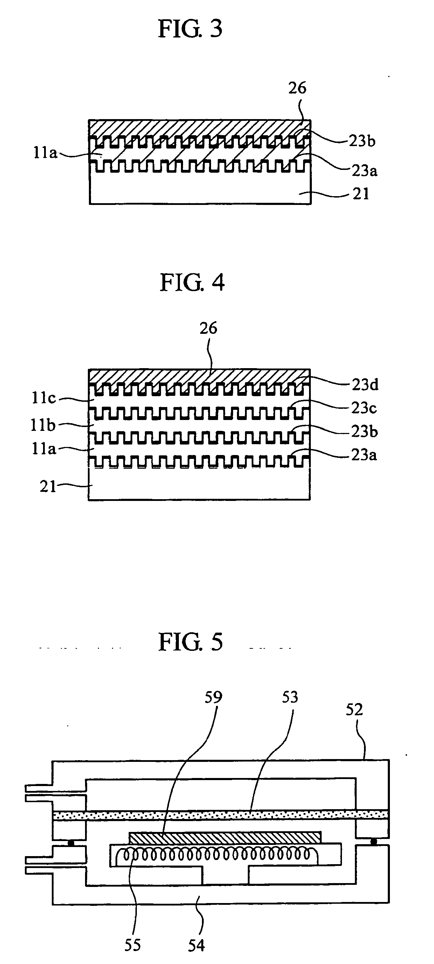

Subsequently, the release sheet 12b is removed from the laminate (step 4), and an uneven surface of a stamper 24 having the uneven surface of recorded pits and/or grooves is placed on the uncured surface (i.e., a surface in noncontact with the substrate) of the photo-curable transfer layer 11 of the laminate to depress the photo-curable transfer sheet and the stamper 24 (step 5). Thus a laminate (comprising 21, 23a, 11, 24) in which the surface of the photo-curable transfer sheet 10 adheres closely to the uneven surface of the stamper 24 is formed, and the photo-curable transfer layer 11 of the laminate is exposed to ultraviolet rays to be cured (generally 300 or more mJ/cm²) (step 6), and then the stamper 24 is removed from the laminate to form an uneven surface on the cured photo-curable transfer layer. Hence, a laminate (optical information recording medium) comprising the substrate 21, the reflective layer 23a and the cured photo-curable transfer layer 11a is obtained. In the invention, in the removal of the stamper, the cured photo-curable transfer layer 11a is left on the reflective layer without adhesion of the transfer layer to the stamper whereby an uneven surface accurately corresponding to that of the stamper can be formed on the surface of the transfer layer.
Generally, on the uneven surface of the cured photo-curable transfer layer 11a, a reflective layer (generally a high reflective layer comprising Al or the like) 23b is formed (step 7). Further, an organic polymer film (cover layer) 26 is bonded onto the reflective layer 23b through an adhesive layer (step 8). Hence, an optical information recording medium as shown in Fig. 3 is obtained. A photo-curable transfer sheet 10 may be further depressed on the uneven surface of the reflective layer and cured by ultraviolet rays (generally 300 or more mJ/cm²). Otherwise, an ultraviolet curable resin may be applied onto the uneven surface of the reflective layer and cured by ultraviolet rays. The half-transparent reflective layer may be an ordinary reflective layer such as Al (for disc readable from double sides). Further, the reflective layer 23a may be changed from a half-transparent reflective layer to a high reflective layer, and the reflective layer 23b may be changed from a high reflective layer to a half-transparent reflective layer. Moreover, the stamper may be a substrate having uneven surface.

In the step 7, a half-transparent reflective layer is formed the uneven surface of the cured photo-curable transfer layer instead of the high reflective layer, and by repeating the steps (2) to (7), three or more uneven surfaces (recorded pits) can be formed.
For example, as shown in Fig. 4, an optical information recording medium having four uneven surfaces (recorded pits) can be formed. Such medium is particularly noted as Blu-ray disc of a next generation optical disc. In more detail, the optical information recording medium is composed of a substrate 21 having uneven surface, a reflective layer 23a having uneven surface provided thereon, a cured optical-curable transfer layer 11a having uneven surface provided on the reflective layer 23a, a reflective layer 23b having uneven surface provided on the uneven surface of the cured optical-curable transfer layer 11a (the reflective layer 23b having generally higher reflectivity than the former reflective layer 23a), a cured optical-curable transfer layer 11b provided on the reflective layer 23b, a reflective layer 23c having uneven surface provided on the transfer layer 11b (the reflective layer 23c having generally higher reflectivity than the former reflective layer 23b), a cured optical-curable transfer layer 11c provided on the reflective layer 23c, and a reflective layer 23d having uneven surface provided on the transfer layer 11c (the reflective layer 23d having generally higher reflectivity than the former reflective layer 23c). An organic polymer film (cover layer) 26 is bonded onto the reflective layer 23d through an adhesive layer in the same manner as above. The order of the extents of reflectivities of the reflective layers 23a to 23d may be reversed.

In the above process, the optical information recording medium exclusively used for reproduction is explained. However, an optical information recording medium used for recording (writing) is also prepared in the same manner as the above process. In the recordable medium, for example, grooves, or grooves and pits are provided instead of the pits, and a metal recording layer is provided instead of the reflective or semitransparent reflective layer. When the recording layer is a dye-recording layer or a recording layer having low reflectivity, a recording layer and reflective layer are generally provided. Besides these points, the recordable medium can be also prepared in the same manner as above.

In the invention, the photo-curable transfer sheet 10 is configured such that the uneven shape corresponding to recorded pits of the substrate 21 can be accurately transferred to the photo-curable transfer layer 11 by depressing the layer (sheet) 11 and the substrate 21 at low temperature of 100°C or less (preferably an ordinary temperature). Superposition of the substrate 21 and the photo-curable transfer layer 11 is generally carried out using a pressure rollers or easy press (preferably under reduced pressure). The photo-curable transfer layer 11 after curing is strongly bonded to the metal used in the reflective layer provided on the substrate 21, and therefore is not peeled from the reflective layer. If necessary, an adhesion promoting layer may be formed on the reflective layer.

In the invention, the photo-curable transfer sheet 10 is configured such that the uneven shape corresponding to recorded pits of the stamper 24 can be accurately transferred to the photo-curable transfer layer 11 by depressing the layer (sheet) 11 and the stamper 24 at low temperature of 100°C or less (preferably an ordinary temperature). Superposition of stamper 24 and the photo-curable transfer layer 11 is generally carried out using a pressure rollers or easy press (preferably under reduced pressure). The photo-curable transfer layer 11 after curing is extremely weakly stuck to metal such as nickel used in the stamper 24, and therefore the photo-curable transfer layer 11 can be easily peeled from the stamper 24.

The substrate 21 generally is s thick plate (generally a thickness of 0.3 to 1.5mm, especially approx. 1.1mm), and therefore generally prepared by a conventional injection molding process. However, the photo-curable transfer layer and stamper are used for preparing the optical information recording medium without the substrate. The photo-curable transfer sheet can be prepared in a small thickness of not more than 300µm (especially not more than 150µm), and therefore the thickness of the substrate prepared by the conventional process can be increased to enhance the accuracy of the form of pits.

In the process, when the photo-curable transfer layer is depressed on the substrate, or when the stamper is depressed on the photo-curable transfer layer, it is preferred to carry out the depressing operation under reduced pressure, whereby the deaeration treatment in the operation can be easily carried out.

The depressing operation under the reduced pressure can be performed by a method comprising passing a photo-curable transfer sheet and a stamper between two rolls under reduced pressure; or by a method comprising placing a stamper in a mold of a vacuum molding device and bringing a photo-curable adhesive sheet into contact with the stamper under reduced pressure to depress them.

Further, the depressing operation under the reduced pressure can be performed using a device according to a double vacuum chamber system. The operation is explained by referring to Fig. 5. Fig. 5 shows an example of a laminator according to a double vacuum chamber system. The laminator is provided with a lower chamber 54, an upper chamber 52, a sheet of silicone rubber 53 and a heater 55. A laminate 59 consisting of a substrate having an uneven surface and a photo-curable transfer sheet provided thereon or consisting of a substrate, transfer sheet and stamper is placed in the lower chamber 54 of the laminator. Both the upper chamber 52 and lower chamber 54 are degassed or decompressed. The laminate 59 is heated with a heater 55, and air is introduced into the upper chamber 52 to allow the chamber to be at atmospheric pressure while the lower chamber 54 is kept under reduced pressure, whereby the laminate is depressed to be contact bonded. After cooling, the laminate is taken out and transformed to the next step. This operation permits sufficient deaeration under reduced pressure, and therefore, the stamper or substrate and the photo-curable transfer sheet can be contact bonded without bubbles.

The photo-curable transfer sheet used of the present invention has the photo-curable transfer layer composed mainly of a photo-curable composition deformable by application of pressure which includes a polymer (preferably having a glass transition temperature of not more than 80°C) and a reactive diluent having a photopolymerizable functional group (polymerizable monomer or oligomer).
The photo-curable composition is generally composed mainly of the polymer (preferably having a glass transition temperature of not less than 80°C) and a reactive diluent (generally monomer or oligomer) having a photopolymerizable functional group (preferably (meth)acryloyl group), a photopolymerization initiator and if necessary other additives.

The feature of the invention lies in that the photo-curable composition contains as the reactive diluent the compound having a photopolymerizable functional group, at least one hydroxyl group and an acryloyl group and/or methacryloyl group, the total of acryloyl group and/or methacryloyl group being at least two. The cured transfer layer of the photo-curable composition having the feature shows excellent adhesion to the reflective layer and enhance easy releasable property from the stamper.

The compound having a hydroxyl group and an acryloyl group and/or methacryloyl group may be any compounds having at least one hydroxyl group, and an acryloyl group and/or methacryloyl group, the total of acryloyl group and/or methacryloyl group being at least two, and therefore the compound may be any compounds having at least one hydroxyl group and at least two acryloyl groups, or at least two methacryloyl groups, or at least one acryloyl group and at least one methacryloyl group. Examples of the compound include those obtained by condensation of polyhydric alcohol having three or more hydroxyl groups (e.g., glycerol, trimethylol propane, trimethylol ethane, pentaerythritol) with two or more (meth)acrylic acids.

The compound having a hydroxyl group and an acryloyl group and/or methacryloyl group preferably is represented by the following formula (I):

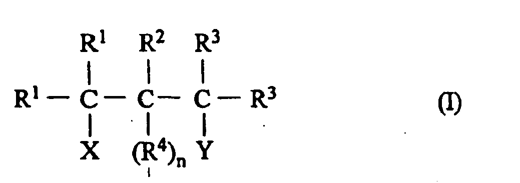

in which R¹ represents a hydrogen atom or an alkyl group having 1 to 5 carbon atoms, and R¹ may be different from each other,
R² represents a hydrogen atom, an alkyl group having 1 to 5 carbon atoms or a hydroxyalkyl group having 1 to 5 carbon atoms,
R³ represents a hydrogen atom or an alkyl group having 1 to 5 carbon atoms, and R³ may be different from each other,
R⁴ represents an alkylene group having 1 to 5 carbon atoms,
X and Y each represent independently an acryloyl group or a methacryloyl group, and
n is 0 or 1.

In the formula (I), R¹ preferably represents a hydrogen atom, R² preferably represents a hydrogen atom, a methyl group, an ethyl group or a hydroxymethyl group, R³ preferably represents a hydrogen atom, R⁴ preferably represents a methylene group, X and Y preferably represent independently an acryloyl group or a methacryloyl group, and n is 0 or 1. Especially, in the formula (I), R¹ preferably represents a hydrogen atom, R² preferably represents a hydrogen atom, R³ preferably represents a hydrogen atom, R⁴ preferably represents a methylene group, X and Y preferably represent independently an acryloyl group or a methacryloyl group, and n preferably is 0.

Preferred examples of the compounds represented by the formula (I) include glycerol diacrylate (especially 1,3-diacryloyl-propane triol), glycerol acrylate methacrylate (especially 1-acryloyl-3-methacryloyl-propane triol; Trade name: G-201P, available from KYOEISHA CHEMICAL Co., LTD), glycerol dimethacrylate (especially 1,3-dimethacryloyl-propane triol; Trade name: G-101P, available from KYOEISHA CHEMICAL Co., LTD), trimethylol propane diacrylate, trimethylol propane acrylate methacrylate, and trimethylol propane dimethacrylate. Preferred are glycerol acrylate methacrylate and glycerol dimethacrylate. In the invention, preferred are those obtained by condensation of polyhydric alcohol with both acrylic acid and methacrylic acid.

The above-mentioned compound is included generally in the amount of 5 to 70% by weight, preferably 5 to 50% by weight, especially 5 to 30% by weight based on the reactive diluent. Thereby the excellent adhesion and easy peelable from a stamper can be particularly obtained.

In case the photo-curable transfer layer of the sheet obtained by using the photo-curable composition having the above-mentioned compound is closely-attached to the stamper and after curing the cured layer is peeled from the stamper, the cured layer shows excellent adhesion to the reflective layer (especially silver alloy) and easy peeling property from the stamper whereby even a part of the cured layer scarcely adheres to the stamped. Therefore, the cured transfer layer is accurately left on the reflective layer such that the uneven surface of the cured transfer layer accurately corresponds to that of the stamper, and hence the recorded surface (the uneven surface) is almost free from error in reading when it is read out by a laser beam.

Examples of the reactive diluent having a photopolymerizable functional group, which is a structural requirement, include, in addition to the above-mentioned compound,
(meth)acrylate monomers such as 2-hydroxyethyl (meth)acrylate, 2-hydroxyropyl (meth)acrylate, 4-hydroxybutyl (meth)acrylate, 2-hydroxyropyl-3-phenyloxypropyl (meth)acrylate, 2-ethylhexyl (meth)acrylate, 2-ethylhexylpolyethoxy (meth)acrylate, benzyl (meth)acrylate, isobornyl (meth)acrylate, phenyloxyethyl (meth)acrylate, tricyclodecane mono(meth)acrylate, dicyclopentenyloxyethyl (meth)acrylate, tetrahydrofurfuryl (meth)acrylate, acryloylmorpholine, N-vinylcaprolactam, o-phenylphenyloxyethyl (meth)acrylate, neopentylglycol di(meth)acrylate, neopentyl glycol dipropoxy di(meth)acrylate, neopentyl glycol hydroxypivalate di(meth)acrylate, tricyclodecanedi-methylol di(meth)acrylate, 1,6-hexanediol di(meth)acrylate, nonanediol di(meth)acrylate, trimethylolpropane tri(meth)acrylate, pentaerythritol tri(meth)acrylate, pentaerythritol tetra(meth)acrylate, tris[(meth)acryloxyethyl]isocyanurate and ditrimethylolpropane tetra(meth)acrylate; and
the following (meth)acrylate oligomer such as:
polyurethane (meth)acrylate such as compounds obtained by reaction of:
   a polyol compound (e.g., polyol such as ethylene glycol, propylene glycol, neopentyl glycol, 1,6-hexanediol, 3-methyl-1,5-pentanediol, 1,9-nonanediol, 2-ethyl-2-butyl-1,3-propanediol, trimethylolpropane, diethylene glycol, dipropylene glycol, polypropylene glycol, 1,4-dimethylolcyclohexane, bisphenol-A polyethoxydiol and polytetramethylene glycol; polyesterpolyol obtained by reaction of the above-mentioned polyol and polybasic acid or anhydride thereof such as succinic acid, maleic acid, itaconic acid, adipic acid, hydrogenated dimer acid, phthalic acid, isophthalic acid and terephthalic acid; polycaprolactone polyol obtained by reaction of the above-mentioned polyol and ε-caprolactone; a compound obtained by reaction of the above-mentioned polyol and a reaction product of the above-mentioned polybasic acid or anhydride thereof and ε-caprolactone; polycarbonate polyol or polymer polyol), and
   an organic polyisocyanate compound (e.g., tolylene diisocyanate, isophorone diisocyanate, xylylene diisocyanate, diphenylmethane-4,4'-diisocyanate, dicyclopentanyl diisocyanate, hexamethylene diisocyanate, 2,4,4'-trimethylhexamethylene diisocyanate, 2,2',4'-trimethylhexamethylene diisocyanate), and
   hydroxyl-containing (meth)acrylate (e.g., 2-hydroxyethyl (meth)acrylate, 2-hydroxyropyl (meth)acrylate, 4-hydroxybutyl (meth)acrylate, 2-hydroxy-3-phenyloxypropyl (meth)acrylate, cyclohexane-1,4-dimethylolmono(meth)acrylate, pentaerythritol tri(meth)acrylate or glycerol di(meth)acrylate);
   bisphenol-type epoxy(meth)acrylate obtained by reaction of bisphenol-A epoxy resin or bisphenol-F epoxy resin and (meth)acrylic acid.
These compounds having photopolymerizable functional group can be employed singly or in combination of two or more kinds.

The reactive diluent is preferably contained in the amount of 20 to 80% by weight (in nonvolatile content), more preferably 30 to 70% by weight, especially 40 to 60% by weight, based on a total amount of the photo-curable composition. A weight ratio of the reactive diluent to polymer is generally 100: 40-160 (polymer: diluent), preferably 100: 60-140, especially 100: 80-120. Thereby it is easy to change the glass transition temperature of the transfer layer to that of not less than 65°C after ultraviolet exposure of 300mJ.

Examples of the polymer (preferably polymer having glass transition temperature of not less than 80°C) include acrylic resin, polyvinyl acetate, vinyl acetate/ (meth)acrylate copolymer, ethylene/vinyl acetate copolymer, polystyrene and copolymer thereof, polyvinyl chloride and copolymer thereof, butadiene/acrylonitrile copolymer, acrylonitrile/butadiene/styrene copolymer, methacrylate/acrylonitrile/butadiene/styrene copolymer, 2-chlorobutasiene-1,3-polymer, chlorinated rubber, styrene/butadiene/styrene copolymer, styrene/isoprene/styrene block copolymer, epoxy resin, polyamide, polyester, polyurethane, cellulose ester, cellulose ether, polycarbonate, polyvinyl acetal.

In the invention, the polymer preferably is acrylic resin in view of excellent transferring property and high curing rate. Especially preferred is acrylic resin having a polymerizable functional group or acrylic resin having a hydroxyl group. The acrylic resin preferably has a recurring unit of methyl methacrylate in the amount of not less than 50% by weight, especially 60 to 90% by weight, because excellent transferring property and high curing rate are easily obtained.

The acrylic resin having a polymerizable functional group generally is a copolymer of methyl methacrylate, at least one alkyl (meth)acrylate whose alkyl has 2 to 10 carbon atoms and glycidyl (meth)acrylate, the glycidyl group being reacted with carboxylic acid having a photopolymerizable functional group; or
a copolymer of methyl methacrylate, at least one alkyl (meth)acrylate whose alkyl has 2 to 10 carbon atoms and carboxylic acid having a photopolymerizable functional group, a carboxyl group of the carboxylic acid being reacted with glycidyl (meth)acrylate.

The copolymer of methyl methacrylate, at least one alkyl (meth)acrylate whose alkyl has 2 to 10 carbon atoms and carboxylic acid having a photopolymerizable functional group, preferably has at least 50% by weight of recurring unit of methyl methacrylate, especially 60 to 90% by weight of recurring unit of methyl methacrylate. An appropriate combination of the acrylic resin with the reactive diluent enables the achievement of both of excellent transferring property and high curing rate. Examples of the alkyl (meth)acrylate whose alkyl has 2 to 10 carbon atoms (especially 3 to 5 carbon atoms) include ethyl (meth)acrylate, n-propyl (meth)acrylate, isopropyl (meth)acrylate, n-butyl (meth)acrylate, isobutyl (meth)acrylate, 2-ethylhexyl (meth)acrylate. Preferred are n-butyl (meth)acrylate, isobutyl (meth)acrylate, 2-ethylhexyl (meth)acrylate. The alkyl (meth)acrylate is preferably contained as recurring unit in the amount of 5 to 30% by weight, especially 10 to 30% by weight, in the polymer. The glycidyl (meth)acrylate or carboxylic acid having a photopolymerizable functional group is preferably contained as recurring unit in the amount of 5 to 25% by weight, especially 5 to 20% by weight, in the polymer. The glycidyl group or carboxyl group of the resultant copolymer is reacted with carboxylic acid having a photopolymerizable reacted with carboxylic acid having a photopolymerizable functional group or glycidyl (meth)acrylate, respectively.

The copolymer having hydroxyl group generally is a copolymer of methyl methacrylate, at least one alkyl (meth)acrylate whose alkyl has 2 to 10 carbon atoms (especially 3 to 5 carbon atoms) and at least one hydroxyalkyl (meth)acrylate whose hydroxyalkyl has 2 to 4 carbon atoms. The methyl methacrylate is preferably contained as recurring unit in the amount of at least 50% by weight, especially 60 to 90% by weight in the polymer. An appropriate combination of the acrylic resin with the reactive diluent enables the achievement of both of excellent transferring property and high curing rate. Examples of the alkyl (meth)acrylate whose alkyl has 2 to 10 carbon atoms (especially 3 to 5 carbon atoms) include ethyl (meth)acrylate, n-propyl (meth)acrylate, isopropyl (meth)acrylate, n-butyl (meth)acrylate, isobutyl (meth)acrylate, 2-ethylhexyl (meth)acrylate. Preferred are n-butyl (meth)acrylate, isobutyl (meth)acrylate, 2-ethylhexyl (meth)acrylate. The alkyl (meth)acrylate is preferably contained as recurring unit in the amount of 5 to 30% by weight, especially 10 to 30% by weight, in the polymer. Examples of the hydroxyalkyl (meth)acrylate whose hydroxyalkyl has 2 to 4 carbon atoms include 2-hydroxyethyl methacrylate, hydroxypropyl methacrylate. The hydroxyalkyl (meth)acrylate is preferably contained as recurring unit in the amount of 5 to 25% by weight, especially 5 to 20% by weight, in the polymer.

The acrylic resin having a polymerizable functional group is, for example, prepared as follows:

One or plural methacrylate(s) (preferably methyl methacrylate and at least one alkyl (meth)acrylate whose alkyl has 2 to 10 carbon atoms as mentioned above) is reacted with a compound having a glycidyl group and a photopolymerizable functional group (preferably glycidyl (meth)acrylate), or with a carboxylic acid having a photopolymerizable functional group in the presence of a radical polymerization initiator and an organic solvent according to a known polymerization process such as a solution polymerization process, whereby glycidyl group-containing acrylic resin (a) or carboxyl group-containing acrylic resin (b) is obtained. The alkyl (meth)acrylate is preferably contained in the amount of 10 to 45% by weight in terms of solid based on the glycidyl group-containing acrylic resin (a) or carboxyl group-containing acrylic resin (b).

Subsequently, carboxylic acid having a photopolymerizable functional group is added to the glycidyl group-containing acrylic resin (a), or a compound having a glycidyl group and a photopolymerizable functional group (preferably glycidyl (meth)acrylate) is added to the carboxyl group-containing acrylic resin (b), with if necessary heating to prepare an acrylic photocurable resin (A) or an acrylic photocurable resin (B). A molar ratio of carboxyl group to glycidyl group is generally 1/0.9 to 1/1, preferably 1/1. Excess glycidyl group may bring about disadvantage in long-term stability such as increase of viscosity or gelation, whereas excess carboxyl group reduces workability due to increase of skin irritation. Further, the ratio of 1/1 brings about disappearance of glycidyl group to extremely enhance storage stability. The reaction can be carried out according to known methods in the presence of base catalyst or phosphorous catalyst.

The (meth)acrylate monomers as chief ingredient of the acrylic resin used in the invention, the acrylic resin including the acrylic resin having a photopolymerizable functional group or hydroxyl group, include esters of acrylic acid or methacrylic acid. Examples of the esters of acrylic acid or methacrylic acid include alkyl(meth)acrylates such as methyl (meth)acrylate [the (meth)acrylate means acrylate and methacrylate, hereinafter in the same manner], ethyl (meth)acrylate, n-propyl (meth)acrylate, n-butyl (meth)acrylate, isobutyl (meth)acrylate, t-butyl (meth)acrylate, 2-ethylhexyl (meth)acrylate, stearyl (meth)acrylate, lauryl (meth)acrylate and tridecyl (meth)acrylate; alkoxyalkyl(meth)acrylates such as ethoxyethyl(meth)acrylate and butoxyethyl(meth)acrylate; alkoxyalkoxyalkyl(meth)acrylates such as 2-methoxyethoxyethyl(meth)acrylate and 2-ethoxyethoxyethyl (meth)acrylate; alkoxy (poly)alkylene glycol (meth)acrylates such as methoxy diethylene glycol (meth)acrylate, ethoxy diethylene glycol (meth)acrylate, methoxy triethylene glycol (meth)acrylate, butoxy triethylene glycol (meth)acrylate and methoxy dipropylene glycol (meth)acrylate; dialkylaminoalkyl(meth)acrylates such as pyrenoxide adduct (meth)acrylates and N,N-dimethylaminoethyl (meth)acrylate. Further there can be mentioned aromatic compounds having unsaturated group (e.g., styrene).

In the invention, it is preferred to use methyl methacrylate and at least one alkyl (meth)acrylate whose alkyl has 2 to 10 carbon atoms.

The polymer, preferably polymer having a glass transition temperature of not less than 80°C, preferably has number average molecular weight of not less than 100,000, especially 100,000 to 300,000, and weight average molecular weight of not less than 100,000, especially 100,000 to 300,000.

As the polymer (preferably polymer having a glass transition temperature of not less than 80°C) the invention, acrylic resin having both of a photopolymerizable functional group and an active hydrogen containing functional group such as a hydroxyl group can be used. Such reactive polymer generally is a homopolymer or copolymer (i.e., acrylic resin) obtained from the above-mentioned (meth)acrylates which has a photopolymerizable functional group and a functional group having active hydrogen in its main chain or side chain. Hence the homopolymers or copolymers can be obtained, for example, by copolymerizing methyl methacrylate, one or more (meth)acrylate mentioned above with (meth)acrylate (e.g., 2-hydroxyethyl (meth)acrylate) having a functional group such as a hydroxyl group, and reacting the resultant polymer with a compound (e.g., isocyanatoalkyl (meth)acrylate) having a functional group capable of reacting with the active hydrogen-containing group of the polymer and having a photopolymerizable functional group. In the latter reaction, the amount of the compound (e.g., isocyanatoalkyl (meth)acrylate) having a functional group capable of reacting with the hydroxyl group is adjusted so as to leave the hydroxyl group. Thus, the reactive polymer having the photopolymerizable functional group and the active hydrogen-containing group can be obtained.

Otherwise, in the reaction, the use of (meth)acrylate (e.g., 2-aminoethyl (meth)acrylate) having an amino group instead of the hydroxyl group results in a polymer having the photopolymerizable functional group and the amino group as the active hydrogen-containing group. Similarly a polymer having the photopolymerizable functional group and a carboxyl group as the active hydrogen-containing group.

In the invention, it is also preferred to use acrylic resin having a photopolymerizable group through urethane bond.

The polymer having both of a photopolymerizable functional group and a active hydrogen-containing group such as hydroxyl group has generally 1 to 50% by mole, preferably 5 to 30% by mole of the photopolymerizable functional group. Examples of the photopolymerizable functional group preferably include acryloyl, methacryloyl and vinyl groups, especially acryloyl and methacryloyl groups.

Examples of diisocyanate usable in the photo-curable composition of the invention include tolylene diisocyanate (TDI), isophorone diisocyanate, xylylene diisocyanate, diphenylmethane-4,4'-diisocyanate, dicyclopentyl diisocyanate, hexamethylene diisocyanate, 2,4,4'-trimethylhexamethylene diisocyanate, 2,2',4-trimethylhexamethylene diisocyanate. Further three or more functional isocyanate compounds such as TDI adduct of trimethylol propane and hexamethylene diisocyanate adduct of trimethylol propane can be employed. Of these compounds, hexamethylene diisocyanate adduct of trimethylol propane is preferred.

The diisocyanate is preferably 0.2 to 4% by weight, especially 0.2 to 2% by weight in the photo-curable composition, which results in appropriate crosslinking of the transfer layer to prevent the transfer layer from exudation with maintaining good transfer property between the transfer layer and the uneven surface of substrate or stamper. The reaction of the above compound with the polymer gradually progresses after the provision of the transfer layer, for example, progresses to a large degree at an ordinary temperature (generally 25°C) for 24 hours. Also it is considered that the polymer and diisocyanate in a coating solution for forming the transfer layer are slightly reacted with each other in the term from its preparation to its coating. Because it is preferred that the transfer layer is cured to some degree between the provision of the transfer layer and the rolling up of the resultant transfer layer, the curing of transfer layer may be promoted by heating during or after of the provision of the transfer layer, or before the rolling up.
As mentioned above, the photo-curable composition is generally composed mainly of the polymer having a glass transition temperature of not less than 80°C and a reactive diluent (generally monomer or oligomer) having a photopolymerizable functional group (preferably (meth)acryloyl group) including the specific monomer of the invention, a photopolymerization initiator and if necessary other additives.

The photo-curable transfer layer preferably has storage elastic moduli of not more than 1×10⁷ Pa at frequency of 1Hz and temperature of 25°C, especially 1×10⁴ to 6×10⁵ Pa. Further the storage elastic moduli preferably is not more than 8×10⁴ Pa at frequency of 1Hz and temperature of 80°C, especially 1×10⁴ to 5×10⁵ Pa. Thereby accurate and rapid transferring can be carried out.
Further, the photo-curable transfer layer of the invention generally has a glass transition temperature of less than 20°C. Thereby, in case the resultant photo-curable layer is depressed to an uneven surface of a stamper, the photo-curable layer follows accurately the uneven surface even at room temperature. The photo-curable transfer layer especially has a glass transition temperature of 15 to -50°C, especially 15 to -10°C whereby the resultant photo-curable layer follows more accurately the uneven surface. When the glass transition temperature exceeds the upper limit, increased pressure and temperature are needed in the depressing and bonding steps of the sheet, which brings about lowering of workability. When the glass transition temperature falls to below the lower limit, the resultant cured sheet does not have sufficient hardness.

The photo-curable transfer layer comprising the photo-curable composition is preferably configured to have a glass transition temperature of not less than 65°C after ultraviolet exposure of 300 mJ/cm². A brief ultraviolet exposure easily prevents occurrence of sagging of a pit portion of the transfer layer brought about by remaining stress in the transferring step, whereby the shape of the transferred pit can be maintained. The photo-curable transfer layer comprising the photo-curable composition of the invention can be advantageously formed by using chiefly the above-mentioned preferable polymer and reactive diluent.

Any known photopolymerization initiators can be used in the invention. The initiators having good storage-stability after mixing with other components are preferred. Examples of the photopolymerization initiators include acetophenone type initiators; benzoin type initiators such as benzylmethylketal; benzophenone type initiators; thioxanthone type initiators such as isopropylthioxanthone and 2,4-diethythioxanthone. Further, as special type, there can be mentioned methylphenylglyoxylate. Especially preferred are 2-hidroxy-2-methyl-l-phenylpropane-1-on, 1-hydroxycyclohexylphenylketone, 2-methyl-1-[4-(methylthio)phenyl]-2-morphorinopropane-1-on and benzophenone. These photopolymerization initiators can be employed together with one or more kinds of a photopolymerization promoter such as a benzoic acid type compound (e.g., 4-dimethylaminobezoic acid) or a tertiary amine compound by mixing the initiator with the promoter in optional ratio. The initiator can be employed singly or in combination of two or more kinds. The initiator is preferably contained in the photo-curable composition in the range of 0.1 to 20% by weight, especially 1 to 10% by weight.

Of the above-mentioned photopolymerizable initiators, examples of the acetophenone type initiator include 4-phenoxydichloroacetophenone, 4-t-butyldichloroacetophenone, 4-t-butyltrichloroacetophenone, diethoxyacetophenone, 2-hydroxy-2-methyl-1-phenylpropane-1-on, 1-(4-isopropylphenyl)-2-hidroxy-2-methylpropane-1-on, 1-(4-dodecylphenyl)-2-hydroxy-2-methylpropane-1-on, 4-(2-hydroxyethoxy)-phenyl(2-hydroxy-2-propyl)ketone, 1-hydroxycyclohexylphenylketone, 2-methyl-1-[4-(methylthio)phenyl]-2-morphorino-propane-1-on; and examples of the benzophenone type initiator include benzophenone, benzoylbenzoic acid, methyl benzoylbenzoate, 4-phenylbenzophenone, hydroxybenzophenone, 4-benzoyl-4'-methylphenylsulfide and 3,3'-dimethyl-4-methoxybenzophenone.

The acetophenone type initiators preferably are 2-hydroxy-2-methyl-1-phenylpropane-1-on, 1-hydroxycyclohexylphenylketone and 2-methyl-1-[4-(methylthio)phenyl]-2-morphorinopropane-1-on, and the benzophenone type initiators preferably are benzophenone, benzoylbenzoic acid and methyl benzoylbenzoate.
Preferred examples of the tertiary amine compounds of the photopolymerization promoter include triethanolamine, methyldiethanolamine, triisopropanolamine, 4,4'-dimethylaminobenzophenone, 4,4'-diethylaminobenzophenone, ethyl 2-dimethylaminobenzonate, ethyl 4-dimethylaminobenzonate, (n-butoxy)ethyl 4-dimethylaminobenzonate, isoamyl 4-dimethylaminobenzonate and 2-ethylhexyl 4-dimethylaminobenzonate. Especially preferred are ethyl 4-dimethylaminobenzonate, (n-butoxy)ethyl 4-dimethylaminobenzonate, isoamyl 4-dimethylaminobenzonate and 2-ethylhexyl 4-dimethylaminobenzonate.

The photo-curable composition preferably contains, in addition to the reactive diluent having a photopolymerizable functional group and the photopolymerization initiator, if desired the following thermoplastic resin and other additives.

As other additives, a silane coupling agent (adhesion promoter) can be used for enhancing adhesive strength (adhesion). Examples of the silane coupling agent include vinyltriethoxysilane, vinyl-tris(β-methoxyethoxy)silane, γ-methacryloxypropylmethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, γ-chloropropylmethoxysilane, vinyltrichlorosilane, γ-mercaptopropylmethoxysilane, γ-aminopropyltriethoxysilane, N-β-(aminoethyl)-γ-aminopropyltrimethoxysilane. The silane coupling agent can be used singly, or in combination of two or more kinds. The silane coupling agent is preferably used in the range of 0.01 to 5 weight by part based on 100 parts by weight of the above polymer.

Similarly, an epoxy group-containing compound can be used for enhancing the adhesive strength. Examples of the epoxy group-containing compounds include triglycidyl tris(2-hydroxyethyl)isocyanurate, neopentylglycol diglycidyl ether, 1,6-hexanediol diglycidyl ether, allyl glycidyl ether, 2-ethylhexyl glycidyl ether, phenyl glycidyl ether, phenol glycidyl ether, p-tert-butylphenyl glycidyl ether, diglycidyl adipate, diglycidyl o-phthalate, glycidyl methacrylate and butyl glycidyl ether. Further, the similar effect is also obtained by using an oligomer having an epoxy group and molecular weight of hundreds to thousands, or a polymer having an epoxy group and molecular weight of thousands to hundreds of thousands. The content of the compound having an epoxy group is sufficient in the range of 0.1 to 20 parts by weight based on 100 parts by weight of the reactive polymer. At least one of the compounds having an epoxy group can be used singly or in combination of two or more kinds.

As other additives, further a hydrocarbon resin can be used for improving processing properties such as laminating properties. The hydrocarbon resin may be either natural resin or synthetic resin. Examples of the natural resins preferably include rosins, rosin derivatives and terpene resins. Examples of the rosins include gum resins, tall oil resins, wood resins. Examples of the rosin derivatives include hydrogenated rosins, disproportionated rosins, polymerized rosins, esterificated rosins, metal salts of rosins. Examples of the terpene resins include α-pinene resins, β-pinene resins, and terpene phenol resins. Moreover, as the natural resin, dammar, copal, shellac can be used. Examples of the synthetic resins preferably include petroleum resins, phenol resins, and xylene resins. Examples of the petroleum resins include aliphatic petroleum resins, aromatic petroleum resins, cycoaliphatic petroleum resins, copolymer type petroleum resins, hydrogenated petroleum resins, pure monomer type petroleum resins, and coumarone-indene resins. Examples of the phenol resins include alkylphenol resins and modified phenol resins. Examples of the xylene resins include xylene resins and modified xylene resins.

The hydrocarbon polymer resin can be used in the amount of 1 to 20 parts by weight, preferably 5 to 15 parts by weight based on 100 parts by weight of the polymer.

The photo-curable composition may contain, in addition to the above-mentioned additives, an ultraviolet absorber, an aging resistant agent, a dye, and a processing auxiliary agent in a small amount. If desired, particles of silica gel, calcium carbonate or silicone copolymer may be contained in a small amount.

The photo-curable transfer sheet comprising the photo-curable composition of the invention is generally prepared by homogeneously mixing the polymer, the compound diluent having a photopolymerizable functional group (monomer and oligomer) and if desired, the diisocyanate and other additives, kneading the mixture using an extruder or roll, and subjecting the kneaded mixture to a film-forming process using a calendar, roll, T-die extrusion or inflation to form a film of a predetermined shape. When a support is used, it is necessary to form a film on the support. A more preferred process for forming the photo-curable sheet comprises the steps of dissolving homogeneously the ingredients in a good solvent, applying the resultant solution onto a separator coated closely with silicone or fluoric resin (or the support) by means of flow-coater method, roll-coater method, gravure-roll method, mayer-bar method or lip-die coating method, and vaporizing the solvent.

The thickness of the photo-curable transfer layer generally is in the range of 1 to 1,200µm, preferably 5 to 500µm, especially 5 to 300µm (preferably not more than 150µm). When the thickness is thinner than 1 µm, sealing properties are lowered and maybe the layer does not full up the unevenness of the transparent substrate. When the thickness is thicker than 1,200µm, the thickness of the resultant recording medium is so thick that trouble in housing or assembly of the medium or reverse influence in light transmittance possibly occurs.

The photo-curable transfer layer preferably has a release sheet on its both sides.

The release sheet is preferably composed of chiefly transparent organic resin having a glass transition temperature of not less than 50°C. Examples of the transparent organic resin include polyester resin (e.g., polyethylene terephthalate, polycyclohexylene terephthalate, polyethylene naphthalate), polyamide (e.g., nylon 46, modified nylon 6T, nylon MXD6, polyphthalamide), ketone resin (e.g., polyphenylene sulfide, polythioether sulfone), sulfone resin (e.g., polysulfone, polyether sulfone), polyether nitrile, polyarylate, polyether imide, polyamideimide, polycarbonate, polymethyl methacrylate, triacetylcellulose, polystyrene or polyvinyl chloride. Of these resins, polycarbonate, polymethyl methacrylate, polyvinyl chloride, polystyrene and polyethylene terephthalate can be preferably employed. The thickness is generally in the range of 10 to 200µm, especially in the range of 30 to 100µm.

The substrate 21 having uneven surface used in the invention is preferably composed of chiefly transparent organic resin having a glass transition temperature of not less than 50°C. Examples of the transparent organic resin include polyester resin (e.g., polyethylene terephthalate, polycyclohexylene terephthalate, polyethylene naphthalate), polyamide (e.g., nylon 46, modified nylon 6T, nylon MXD6, polyphthalamide), ketone resin (e.g., polyphenylene sulfide, polythioether sulfone), sulfone resin (e.g., polysulfone, polyether sulfone), polyether nitrile, polyarylate, polyether imide, polyamideimide, polycarbonate, polymethyl methacrylate, triacetylcellulose, polystyrene or polyvinyl chloride. Of these resins, polycarbonate, polymethyl methacrylate, polyvinyl chloride, polystyrene and polyethylene terephthalate are excellent in transferring properties and birefringence, and therefore can be preferably employed. The thickness is generally in the range of 200 to 2,000µm, especially in the range of 500 to 1,500µm.

The polymer film 26 for protection used in the invention is preferably composed of chiefly transparent organic resin having a glass transition temperature of not less than 50°C. Examples of the transparent organic resin include polyester resin (e.g., polyethylene terephthalate, polycyclohexylene terephthalate, polyethylene naphthalate), polyamide (e.g., nylon 46, modified nylon 6T, nylon MXD6, polyphthalamide), ketone resin (e.g., polyphenylene sulfide, polythioether sulfone), sulfone resin (e.g., polysulfone, polyether sulfone), polyether nitrile, polyarylate, polyether imide, polyamideimide, polycarbonate, polymethyl methacrylate, triacetylcellulose, polystyrene or polyvinyl chloride. Of these resins, polycarbonate, polymethyl methacrylate, polyvinyl chloride, polystyrene and polyethylene terephthalate are excellent in transparency and birefringence, and therefore can be preferably employed. The thickness is generally in the range of 10 to 200µm, especially in the range of 50 to 100µm.

The resultant photo-curable transfer sheet generally has a light transmittance of not less than 70% in a wavelength rang of 380 to 420nm.

The photo-curable transfer sheet generally has a light transmittance of not less than 70% in a wavelength rang of 380 to 420nm, preferably 380 to 800nm, whereby reduction of the strength of signals to be read out with a laser beam can be prevented. Further, the sheet preferably has a light transmittance of not less than 80% in a wavelength rang of 380 to 420nm.

The photo-curable transfer sheet of the invention can be obtained as a film accurately controlled in the thickness, and therefore it is possible to easily and precisely bond the sheet to the uneven surface such as the substrate or stamper. This bonding (contact bonding) can be easily carried out by depressing the sheet and stamper by means of an easy method using pressure rollers or easy press to temporarily bond them at temperature of 20 to 100°C, and then curing the sheet by exposing it to light at room temperature for one to tens seconds. Further, the temporarily bonded laminate is free from occurrence of slippage (sagging) or peeling between of the sheet and stamper or substrate owing to its autohesion force, and hence the laminate can be freely handled until the light-curing step.

In case the photo-curable transfer sheet of the invention is cured, it is possible to adopt, as light source used, various sources generating light in the wavelength range of ultraviolet to visible rays. Examples of the sources include super-high-pressure, high-pressure and low-pressure mercury lamps, a chemical lamp, a xenon lamp, a halogen lamp, a mercury halogen lamp, a carbon arc lamp, and an incandescent electric lamp, and laser beam. The exposing time is generally in the range of 0.1 second to dozens seconds, preferably 0.5 second to a few seconds, depending upon kinds of the lamp and strength of light. The amount of the ultraviolet exposure preferably is not less than 300 mJ/cm².

To promote the curing, the laminate may be heated beforehand for 30 to 80°C, and then the heated laminate may be exposed to ultraviolet rays.

The reflective layer of the invention on an uneven surface of the substrate is formed by vapor-depositing (e.g., spattering, vacuum deposition, ion-plating) metal material on the substrate. Examples of the metal material include aluminum, gold, silver or alloys thereof. The metal material preferably is silver alloys, especially AgX (preferably X=Cu·Pd or Cu-Nd).
The semitransparent reflective layer on the substrate is generally formed by using silver or the like as metal. In more detail, the reflective layer on the cured transfer layer is generally required to have increased reflectivity compared with the semitransparent reflective layer, and therefore is formed by changing the materials and/or the thickness. For example, reflectivity of a reflective layer of silver alloy can be changed by variation of the thickness, and hence plural reflective layers of silver alloy (from low to high reflective layers) can be provided by variation of the thickness

When the organic polymer film is bonded onto the reflective layer of the cured sheet, an adhesive is applied onto one of the film and the sheet, and the other is superposed on the adhesive layer to be cured. When the adhesive is UV-curable resin, it is cured by UV irradiation, and when the adhesive is hot-melt type, it is applied to the reflective layer under heating and then cooled.
In the preparation of the optical information recording medium of the invention, it is continuously processed in the form of disc. However, it may be processed in the form of sheet and finally punched out in the form of disc.

The invention is illustrated in detail using the following Examples.

### EXAMPLE

### [Example 1]

### <Preparation of photo-curable transfer sheet>

### (Preparation of polymer 1 having hydroxyl group)

### Polymer Formulation 1

| | |
|---|---|
| Methyl methacrylate | 74.6 parts by weight |
| n-Butyl methacrylate | 13.2 parts by weight |
| 2-Hydroxyethyl methacrylate | 12.1 parts by weight |
| AIBN | 1.2 parts by weight |
| Toluene | 70 parts by weight |
| Ethyl acetate | 30 parts by weight |

A mixture of the above Formulation 1 was heated to 70°C with moderately stirring to initiate the polymerization, and stirred at this temperature for 8 hours to provide polymer 1 (acrylic resin) having a hydroxyl group on its side chain. The solid content was adjusted to 36% by weight (polymer solution 1).

The polymer 1 had Tg of 91°C and weight average molecular weight of 110,000.

### Composition Formulation 1

| | |
|---|---|
| Solution 1 of polymer having hydroxyl group | 100 parts by weight |
| Hexanediol dimethacrylate (KS-HDDA) | 100 parts by weight |
| Trimethylol propane triacrylate (TMP-A, available from KYOEISHA CHEMICAL Co., LTD) | 20 parts by weight |
| | |
| 2-Hydroxy-3-acryloyloxypropylmethacrylate | 20 parts by weight |
| (G-201 P, available from KYOEISHA CHEMICAL Co., LTD) | |
| Diisocyanate | 1 part by weight |
| (BXX5627, available from Toyo Ink Mfg.) | |
| Irgercure 651 (available from Chiba-Geigy) | 1 part by weight |
| Hydroquinone monomethyl ether (MEHQ) | 0.05 part by weight |

The above Formulation 1 was homogeneously dissolved to give a mixture, which was applied onto a whole surface of a release sheet (width: 140mm, length: 300m, thickness: 75µm; trade name: No. 23, available from Fujimori Kogyo) and dried to form a photo-curable transfer layer of thickness of 25µm. Subsequently, a release sheet that is the same as above is applied to the opposite side of the photo-curable transfer layer to be rolled up in the form of roll. Thus, a full-edge type roll of photo-curable transfer sheet of diameter of 260mm was prepared. The transfer layer of photo-curable transfer sheet had storage elastic moduli of 4.0×10⁴ Pa at 25°C, 1Hz, and 3.0×10⁴ Pa at 80°C, 1Hz, and Tg of -20°C.

### [Example 2]

Example 1 was repeated except for the procedure for preparation of Composition Formulation 1 and later procedures, which were carried out below, to prepare a full-edge type roll of photo-curable transfer sheet.

### Composition Formulation 1

| | |
|---|---|
| Solution 1 of polymer having hydroxyl group | 100 parts by weight |
| Hexanediol dimethacrylate (KS-HDDA) | 110 parts by weight |
| 2-Hydroxy-3-acryloyloxypropylmethacrylate | 20 parts by weight |
| (G-201P, available from KYOEISHA CHEMICAL Co., LTD) | |
| Diisocyanate | 1 part by weight |
| (BXX5627, available from Toyo Ink Mfg.) | |
| Irgercure 651 (available from Chiba-Geigy) | 1 part by weight |
| Hydroquinone monomethyl ether (MEHQ) | 0.05 part by weight |

The above Formulation 1 was homogeneously dissolved to give a mixture, which was applied onto a whole surface of a release sheet (width: 140mm, length: 300m, thickness: 75µm; trade name: No. 23, available from Fujimori Kogyo) and dried to form a photo-curable transfer layer of thickness of 25µm. Subsequently, a release sheet that is same as above is applied to the opposite side of the photo-curable transfer layer to be rolled up in the form of roll. Thus, a full-edge type roll of photo-curable transfer sheet of diameter of 260mm was prepared. The transfer layer of photo-curable transfer sheet had storage elastic moduli of 5.0×10⁴ Pa at 25°C, 1Hz, and 3.5×10⁴ Pa at 80°C, 1Hz, and Tg of -20°C.

### [Comparison Example 1]

Example 1 was repeated except for the procedure for preparation of Composition Formulation 1 and later procedures, which were carried out below, to prepare a full-edge type roll of photo-curable transfer sheet.

### Composition Formulation 1

| | |
|---|---|
| Solution 1 of polymer having hydroxyl group | 100 parts by weight |
| Hexanediol dimethacrylate (KS-HDDA) | 90 parts by weight |
| Trimethylol propane triacrylate (TMP-A, available from KYOEISHA CHEMICAL Co., LTD) | 20 parts by weight |
| Irgercure 651 (available from Chiba-Geigy) | 1 part by weight |
| Hydroquinone monomethyl ether (MEHQ) | 0.05 part by weight |

The above Formulation 1 was homogeneously dissolved to give a mixture, which was applied onto a whole surface of a release sheet (width: 140mm, length: 300m, thickness: 75µm; trade name: No. 23, available from Fujimori Kogyo) and dried to form a photo-curable transfer layer of thickness of 25µm. Subsequently, a release sheet that is same as above is applied to the opposite side of the photo-curable transfer layer to be rolled up in the form of roll. Thus, a full-edge type roll of photo-curable transfer sheet of diameter of 260mm was prepared. The transfer layer of photo-curable transfer sheet had storage elastic moduli of 1.0×10⁵ Pa at 25°C, 1Hz, and 6.0×10⁴ Pa at 80°C, 1Hz, and Tg of -20°C.

### [Comparison Example 2]

Example 1 was repeated except for the procedure for preparation of Composition Formulation 1 and later procedures, which were carried out below, to prepare a full-edge type roll of photo-curable transfer sheet.

### Composition Formulation 1

| | |
|---|---|
| Solution 1 of polymer having hydroxyl group | 100 parts by weight |
| Hexanediol dimethacrylate (KS-HDDA) | 90 parts by weight |
| Trimethylol propane triacrylate (TMP-A, available from KYOEISHA CHEMICAL Co., LTD) | 20 parts by weight |
| 2-Hydroxyethyl acrylate (HO-A, | 20 parts by weight |
| available from KYOEISHA CHEMICAL Co., LTD) | |
| Diisocyanate | 1 part by weight |
| (BXX5627, available from Toyo Ink Mfg.) | |
| Irgercure 651 (available from Chiba-Geigy) | 1 part by weight |
| Hydroquinone monomethyl ether (MEHQ) | 0.05 part by weight |

The above Formulation 1 was homogeneously dissolved to give a mixture, which was applied onto a whole surface of a release sheet (width: 140mm, length: 300m, thickness: 75µm; trade name: No. 23, available from Fujimori Kogyo) and dried to form a photo-curable transfer layer of thickness of 25µm. Subsequently, a release sheet that is same as above is applied to the opposite side of the photo-curable transfer layer to be rolled up in the form of roll. Thus, a full-edge type roll of photo-curable transfer sheet of diameter of 260mm was prepared. The transfer layer of photo-curable transfer sheet had storage elastic moduli of 4.0×10⁴ Pa at 25°C, 1Hz, and 3.0×10⁴ Pa at 80°C, 1Hz, and Tg of -20°C.

### [Comparison Example 3]

Example 1 was repeated except for the procedure for preparation of Composition Formulation 1 and later procedures, which were carried out below, to prepare a full-edge type roll of photo-curable transfer sheet.

### Composition Formulation 1

| | |
|---|---|
| Solution 1 of polymer having hydroxyl group | 100 parts by weight |
| Hexanediol dimethacrylate (KS-HDDA) | 90 parts by weight |
| Trimethylol propane triacrylate (TMP-A, | 20 parts by weight |
| available from KYOEISHA CHEMICAL Co., LTD) | |
| Tetrahydrofurfuryl acrylate (THF-A, available from KYOEISHA CHEMICAL Co., LTD) | 20 parts by weight |
| Diisocyanate | 1 part by weight |
| (BXX5627, available from Toyo Ink Mfg.) | |
| Irgercure 651 (available from Chiba-Geigy) | 1 part by weight |
| Hydroquinone monomethyl ether (MEHQ) | 0.05 part by weight |

The above Formulation 1 was homogeneously dissolved to give a mixture, which was applied onto a whole surface of a release sheet (width: 140mm, length: 300m, thickness: 75µm; trade name: No. 23, available from Fujimori Kogyo) and dried to form a photo-curable transfer layer of thickness of 25µm. Subsequently, a release sheet that is same as above is applied to the opposite side of the photo-curable transfer layer to be rolled up in the form of roll. Thus, a full-edge type roll of photo-curable transfer sheet of diameter of 260mm was prepared. The transfer layer of photo-curable transfer sheet had storage elastic moduli of 4.0x 10⁴ Pa at 25°C, 1Hz, and 3.0×10⁴ Pa at 80°C, 1Hz, and Tg of -20°C.

### (1) Evaluation of photo-curable transfer sheet

### (1-1) Determination of glass transition temperature (Tg)

The release sheets on the both side of the photo-curable transfer sheet are removed from the transfer sheet, and the resultant transfer sheets (layers) are cut into a size of length of 20mm and width of 4mm (thickness: 25µm) to prepare samples.

Tg of the samples are measured by use of a TMA (Thermal Mechanical Analysis) device SS6100 (available from SII Nano Technology Inc.) under the conditions of sample temperature of 30-120°C, temperature rising rate of 5°C/min. and tension of 4.9×10⁵ Pa.

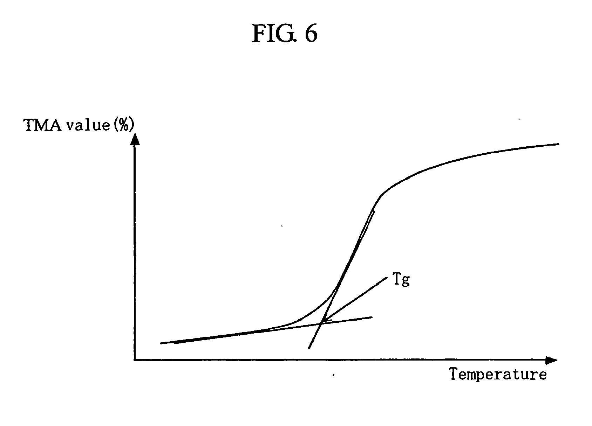

The data measured under the above conditions brings about a graph of Fig. 6, and intersection of tangential line of stable region with tangential line of maximum gradient of expanding region is decided to glass transition temperature.

### (1-2) Determination of storage elastic modulus of transfer sheet

The storage elastic moduli of the photo-curable transfer sheets obtained in Examples 1 to 4 and Comparison Example 1 are measured by using RheoStress RS300 (available from HAAKE) as a dynamic viscoelasticity measuring apparatus. The measurement is carried out using a parallel plate of ϕ = 8mm under the conditions of a thickness to be measured of 400µm (obtained by superposing and forming the transfer layers), measuring temperatures of 25°C and 80°C, and frequency of 1Hz.

### (2) Evaluation of optical information recording medium

### (2-1) Preparation of laminate of substrate, reflective layer and cured transfer layer for evaluation of optical information recording medium

After the photo-curable transfer sheet was punched out in the form of disc, one release sheet of the resultant disc-shaped photo-curable transfer sheet was removed, and the photo-curable transfer sheet was placed on a semi-transparent reflective layer of silver alloy [Ag·Cu·Nd=98.4:0.7:0.9 (by weight); thickness: 40nm] formed on an uneven surface of a polycarbonate substrate (thickness: 1.1mm) having the uneven surface as pits formed by injection molding such that the surface of the transfer sheet was in contact with the reflective layer, and depressed using a roller made of silicone rubber under load of 2kg to form a laminate (corresponding to (3) of Fig. 2).

Subsequently, the other release sheet of the transfer sheet of the laminate was removed, and an uneven surface of a nickel stamper having the uneven surface as pits, which had been adjusted to 50°C, was placed on the exposed surface of the transfer sheet such that the uneven surface was in contact with the exposed surface, and the stamper was depressed using a roller made of silicone rubber under load of 2kg to form a laminate, whereby the uneven surface of the stamper was transferred to the exposed surface of the transfer sheet.

Subsequently, the photo-curable transfer sheet of the laminate was exposed to UV-rays through the semi-transparent reflective layer (Ag·Cu·Nd) under the condition of an integrated amount of light of 300mJ/cm² (exposure distance: 20cm, exposure time: 1.0 sec.) using a metal halide lamp (600mW/cm) and as a result, the transfer sheet (transfer layer) was cured.

The stamper was peeled from the laminate by knocking up the laminate. Thus, a laminate consisting of the substrate, the reflective layer and the cured transfer layer provided with transferred uneven surface was prepared.

Subsequent procedures such as formation of reflective layer were omitted.

### (2-2) Adhesion of cued transfer layer to reflective layer (Ag·Cu·Nd) (and peeling property of stamper)

Preparation of the laminate (until removal of stamper) is repeated five times. What extend of the cued transfer layer is transferred to the stamper and what extend of the cued transfer layer is peeled, are observed.

The case that whole of the cured transfer layer is left on the reflective layer after removal of stamper is decided to pass. The results are indicated by assigning test times to denominator and pass times to numerator. For example, the case of all passes is represented by 5/5.

### (2-3) Determination of glass transition temperature (Tg)

The samples obtained in the same manner as the item (1-1) are exposed to UV-rays under the condition of an integrated amount of light of 300mJ/cm², and then Tg of each of the samples is measured in the same manner as the item (1-1).

The integrated amount of light is determined by measuring the surface of the sample with UV Power Pack (measurement of UV-A band) available from Fusion UV. System Japan KK.

The obtained results are shown in Table 1.

**Table 1**

| | | Example 1 | Example 2 | Co. Ex. 1 | Co. Ex. 2 | Co. Ex. 3 |
|---|---|---|---|---|---|---|
| **[Compsition of Transfer Layer]** | | | | | | |
| Polymer 1 (containing OH) | | 100 | 100 | 100 | 100 | 100 |
| KS-HDDA | | 100 | 110 | 90 | 90 | 90 |
| TMP-A | | 20 | - | 20 | 20 | 20 |
| G-201P | | 20 | 20 | - | - | - |
| HO-A | | - | - | - | 20 | - |
| THF-A | | - | - | - | - | 20 |
| Irg. 651 | | 1 | 1 | 1 | 1 | 1 |
| BXX5627 | | 1 | 1 | 1 | 1 | 1 |
| MEHQ | | 0.05 | 0.05 | 0.05 | 0.05 | 0.05 |

| **[Properties]** | | | | | | |
|---|---|---|---|---|---|---|
| Tg of Polymer (°C) | | 100 | 100 | 100 | 100 | 100 |
| MW of Polymer | | 110000 | 110000 | 110000 | 110000 | 110000 |
| Tg of Transfer Layer (°C) | | -20 | -20 | -20 | -20 | -20 |
| Storage Elastic Modulus Before Curing | (20°C: Pa) | 4.0×10⁴ | 5.0×10⁴ | 1.0×10⁵ | 4.0×10⁴ | 4.0×10⁴ |
| | (80°C: Pa) | 3.0×10⁴ | 3.5×10⁴ | 6.0×10⁴ | 3.0×10⁴ | 3.0×10⁴ |
| Tg of Transfer Layer After UV exposure (°C) | | 65 | 65 | 65 | 65 | 65 |

| **[Evaluation]** | | | | | | |
|---|---|---|---|---|---|---|
| Adhesion of Transfer Layer | | 5/5 | 5/5 | 0/5 | 1/5 | 1/5 |

The photo-curable transfer sheets obtained from Examples 1 and 2 show excellent adhesion of the cured transfer layer to the reflective layer (it is also expected that easy peeling property from the stamper is excellent), while the photo-curable transfer sheets obtained from Comparison Examples 1 to 3 show poor adhesion. This is considered to be because Comparison Examples 1 to 3 do not use the specific reactive diluent of the invention.

### Industrial Applicability

The use of the photo-curable transfer sheet of the invention brings a about rapid preparation of an optical information recording medium (e.g., DVD) having high accuracy.

## Claims

1. A photo-curable transfer sheet having a photo-curable transfer layer comprising a photo-curable composition deformable by application of pressure,
wherein the photo-curable composition comprises a polymer and a reactive diluent having a photopolymerizable functional group, and the reactive diluent is a compound represented by the following formula (I): 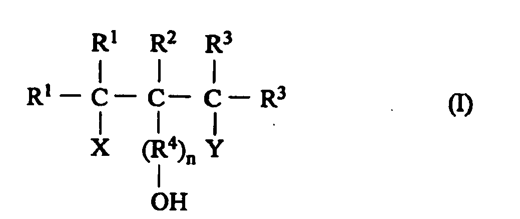 in which R¹ represents a hydrogen atom or an alkyl group having 1 to 5 carbon atoms and R¹ may be different from each other,
R² represents a hydrogen atom, an alkyl group having 1 to 5 carbon atoms or a hydroxyalkyl group having 1 to 5 carbon atoms,
R³ represents a hydrogen atom or an alkyl group having 1 to 5 carbon atoms and R³ may be different from each other,
R⁴ represents an alkylene group having 1 to 5 carbon atoms,
X and Y independently represent an acryloyl group or a methacryloyl group, and
n is 0 or 1.

2. The photo-curable transfer sheet as defined in claim 1, wherein, in the formula (I),
R¹ represents a hydrogen atom,
R² represents a hydrogen atom, a methyl group, an ethyl group or a hydroxymethyl group,
R³ represents a hydrogen atom,
R⁴ represents a methylene group,
X and Y independently represent an acryloyl group or a methacryloyl group, and
n is 0 or 1.

3. The photo-curable transfer sheet as defined in claim 1 or 2, wherein, in the formula (I),
R¹ represents a hydrogen atom,
R² represents a hydrogen atom,
R³ represents a hydrogen atom,
X and Y independently represent an acryloyl group or a methacryloyl group, and
n is 0.

4. The photo-curable transfer sheet as defined in any of claims 1 to 3, wherein the polymer has a glass transition temperature of not less than 80°C.

5. The photo-curable transfer sheet as defined in any of claims 1 to 4, wherein the photo-curable transfer layer having been subjected to ultraviolet exposure of 300 mJ/cm² has a glass transition temperature of not less than 65°C.

6. The photo-curable transfer sheet as defined in any of claims 1 to 5, wherein the photo-curable composition has a glass transition temperature of less than 20°C.

7. The photo-curable transfer sheet as defined in any of claims 1 to 6, wherein the polymer is acrylic resin.

8. The photo-curable transfer sheet as defined in claim 7, wherein the acrylic resin has at least 50% by weight of recurring unit of methyl methacrylate.

9. The photo-curable transfer sheet as defined in claim 7 or 8, wherein the acrylic resin has a photopolymerizable functional group.

10. The photo-curable transfer sheet as defined any of claims 7 to 9, wherein the acrylic resin is a copolymer of methyl methacrylate, at least one alkyl (meth)acrylate whose alkyl has 2 to 10 carbon atoms and glycidyl (meth)acrylate, the glycidyl group being reacted with carboxylic acid having a photopolymerizable functional group.

11. The photo-curable transfer sheet as defined any of claims 7 to 9, wherein the acrylic resin is a copolymer of methyl methacrylate, at least one alkyl (meth)acrylate whose alkyl has 2 to 10 carbon atoms and carboxylic acid having a photopolymerizable functional group, a carboxyl group of the carboxylic acid being reacted with glycidyl (meth)acrylate.

12. The photo-curable transfer sheet as defined in claim 7 or 8, wherein the acrylic resin has a hydroxyl group.

13. The photo-curable transfer sheet as defined any of claims 7, 8 and 12, wherein the acrylic resin is a copolymer of methyl methacrylate, at least one alkyl (meth)acrylate whose alkyl has 2 to 10 carbon atoms and at least one hydroxyalkyl (meth)acrylate whose hydroxyalkyl has 2 to 4 carbon atoms.

14. The photo-curable transfer sheet as defined in any of claims 1 to 13, wherein the photo-curable composition further contains diisocyanate.

15. The photo-curable transfer sheet as defined in any of claims 4 to 14, wherein the polymer having a glass transition temperature of not less than 80°C has weight average molecular weight of not less than 100,000.

16. The photo-curable transfer sheet as defined in any of claims 1 to 15, wherein the photo-curable composition contains 0.1 to 10% by weight of a photopolymerization initiator.

17. The photo-curable transfer sheet as defined in any of claims 1 to 16, which has light transmittance of not less than 70% in the range of wavelengths of 380 to 420nm.

18. The photo-curable transfer sheet as defined in any of claims 1 to 17, which has light transmittance of not less than 70% in the range of wavelengths of 380 to 800nm.

19. The photo-curable transfer sheet as defined in any of claims 1 to 18, wherein the photo-curable transfer layer has a thickness of 5 to 300µm.

20. The photo-curable transfer sheet as defined in any of claims 1 to 19, wherein a release sheet is provided on one side or both sides of the photo-curable transfer layer.

21. The photo-curable transfer sheet as defined in claim 20, which is in the form of continuous length, and has the approximately same width as the release sheet.

22. A process for the preparation of an optical information recording medium comprising of the steps (2) to (4):
a step (2) of removing the release sheet on one side of the photo-curable transfer sheet as defined in claim 20 or 21, in case the photo-curable transfer sheet has the release sheets on the both sides,
a step (3) of placing the photo-curable transfer sheet on an uneven surface of a reflective layer, such that the photo-curable transfer layer is in contact with the uneven surface, the reflective layer being formed on an uneven surface of a substrate having the uneven surface of recorded pits and/or grooves, and depressing the photo-curable transfer sheet and the substrate to form a laminate in which the one side of the photo-curable transfer sheet adheres closely to the uneven surface of the reflective layer, and
a step (4) of removing the release sheet on the other side of the photo-curable transfer layer of the laminate.

23. The process for the preparation of an optical information recording medium as defined in claim 22,
wherein prior to the step (2), the following step (1) is performed:
a step (1) of punching out a disc from the photo-curable transfer sheet, or
a step (1) of punching out a disc comprising the photo-curable transfer layer and the release sheet on one side of the photo-curable transfer sheet from the photo-curable transfer sheet without punching out the other side release sheet.

24. The process for the preparation of an optical information recording medium as defined in claim 22 or 23,
wherein after the step (4), the following steps (5) and (6) are performed:
a step (5) of placing an uneven surface of a stamper having the uneven surface of recorded pits and/or grooves on the surface having no release sheet of the laminate, and depressing the photo-curable transfer sheet and the stamper to form a laminate in which the surface of the photo-curable transfer layer adheres closely to the uneven surface of the stamper, and
a step (6) of exposing the laminate having the stamper to ultraviolet rays to cure the photo-curable transfer layer, and removing the stamper from the laminate to form an uneven surface on the photo-curable transfer layer.

25. The process for the preparation of an optical information recording medium as defined in claim 24, wherein the ultraviolet exposure of the step (6) is carried out in irradiation energy of 300 mJ/cm².

26. The process for the preparation of an optical information recording medium as defined in claim 24 or 25, wherein the photo-curable transfer layer obtained after the step (6) has a glass transition temperature of not less than 65°C.

27. The process for the preparation of an optical information recording medium as defined in any of claims 24 to 26,
wherein after steps (5) and (6), the following step (7) is performed:
a step (7) of forming a reflective layer on the uneven surface of the photo-curable transfer layer.

28. An optical information recording medium obtainable by the process as defined in any of claims 22 to 27.

## Patentansprüche

1. Photohärtbares Transferblatt mit einer photohärtbaren Transferschicht, die eine durch Druckanwendung verformbare photohärtbare Zusammensetzung aufweist,
wobei die photohärtbare Zusammensetzung ein Polymer und ein reaktives Verdünnungsmittel mit einer photopolymerisierbaren funktionellen Gruppe aufweist und das reaktive Verdünnungsmittel eine durch die folgende Formel (I) dargestellte Verbindung ist: 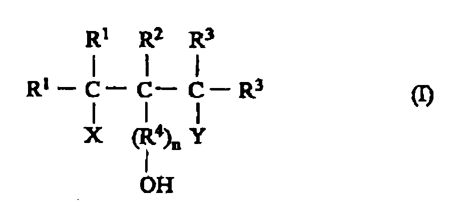 wobei R¹ ein Wasserstoffatom oder eine Alkylgruppe mit 1 bis 5 Kohlenstoffatomen darstellt und R¹-Gruppen voneinander verschieden sein können,
R² ein Wasserstoffatom, eine Alkylgruppe mit 1 bis 5 Kohlenstoffatomen oder eine Hydroxyalkylgruppe mit 1 bis 5 Kohlenstoffatomen darstellt,
R³ ein Wasserstoffatom oder eine Alkylgruppe mit 1 bis 5 Kohlenstoffatomen darstellt und R³-Gruppen voneinander verschieden sein können,
R⁴ eine Alkylengruppe mit 1 bis 5 Kohlenstoffatomen darstellt,
X und Y eine Acryloylgruppe oder eine Methacryloylgruppe darstellen, und n gleich 0 oder 1 ist.

2. Photohärtbares Transferblatt nach Anspruch 1, wobei in Formel (I) R¹ ein Wasserstoffatom darstellt,
R² ein Wasserstoffatom, eine Methylgruppe, eine Ethylgruppe oder eine Hydroxymethylgruppe darstellt,
R³ ein Wasserstoffatom darstellt,
R⁴ eine Methylengruppe darstellt,
X und Y unabhängig voneinander eine Acryloylgruppe oder eine Methacryloylgruppe darstellen, und
n gleich 0 oder 1 ist.

3. Photohärtbares Transferblatt nach Anspruch 1 oder 2, wobei in Formel (I) R¹ ein Wasserstoffatom darstellt,
R² ein Wasserstoffatom darstellt,
R³ ein Wasserstoffatom darstellt
X und Y unabhängig voneinander eine Acryloylgruppe oder eine Methacryloylgruppe darstellen, und
n gleich 0 ist.

4. Photohärtbares Transferblatt nach einem der Ansprüche 1 bis 3, wobei das Polymer eine Glasübergangstemperatur von nicht weniger als 80°C aufweist.

5. Photohärtbares Transferblatt nach einem der Ansprüche 1m bis 4, wobei die photohärtbare Transferschicht, die einer Ultraviolettbestrahlung von 300 mJ/cm² ausgesetzt worden ist, eine Glasübergangstemperatur von nicht weniger als 65°C aufweist.

6. Photohärtbares Transferblatt nach einem der Ansprüche 1 bis 5, wobei die photohärtbare Zusammensetzung eine Glasübergangstemperatur von weniger als 20°C aufweist.

7. Photohärtbares Transferblatt nach einem der Ansprüche 1 bis 6, wobei das Polymer Acrylharz ist.

8. Photohärtbares Transferblatt nach Anspruch 7, wobei das Acrylharz mindestens 50% Methylmethacrylat-Struktureinheiten aufweist.

9. Photohärtbares Transferblatt nach Anspruch 7 oder 8, wobei das Acrylharz eine photopolymerisierbare funktionelle Gruppe aufweist.

10. Photohärtbares Transferblatt nach einem der Ansprüche 7 bis 9, wobei das Acrylharz ein Copolymer von Methylmethacrylat, mindestens einem Alkyl(meth)acrylat, dessen Alkyl 2 bis 10 Kohlenstoffatome aufweist, und Glycidyl(meth)acrylat ist, wobei die Glycidylgruppe mit Carbonsäure zur Reaktion gebracht wird, die eine photopolymerisierbare funktionelle Gruppe aufweist.

11. Photohärtbares Transferblatt nach einem der Ansprüche 7 bis 9, wobei das Acrylharz ein Copolymer von Methylmethacrylat, mindestens einem Alkyl(meth)acrylat, dessen Alkyl 2 bis 10 Kohlenstoffatome aufweist, und Carbonsäure mit einer photopolymerisierbaren funktionellen Gruppe ist, wobei eine Carboxylgruppe der Carbonsäure mit Glycidyl(meth)acrylat zur Reaktion gebracht wird.

12. Photohärtbares Transferblatt nach Anspruch 7 oder 8, wobei das Acrylharz eine Hydroxylgruppe aufweist.

13. Photohärtbares Transferblatt nach einem der Ansprüche 7, 8 und 12, wobei das Acrylharz ein Copolymer von Methylmethacrylat, mindestens einem Alkyl(meth)acrylat, dessen Alkyl 2 bis 10 Kohlenstoffatome aufweist, und mindestens einem Hydroxyalkyl(meth)acrylat ist, dessen Hydroxyalkyl 2 bis 4 Kohlenstoffatome aufweist.

14. Photohärtbares Transferblatt nach einem der Ansprüche 1 bis 13, wobei die photohärtbare Zusammensetzung ferner Diisocyanat aufweist.

15. Photohärtbares Transferblatt nach einem der Ansprüche 4 bis 14, wobei das Polymer mit einer Glasübergangstemperatur von nicht weniger als 80°C ein massegemitteltes Molekulargewicht von nicht weniger als 100000 aufweist.

16. Photohärtbares Transferblatt nach einem der Ansprüche 1 bis 15, wobei die photohärtbare Zusammensetzung 0,1 bis 10 Gew.-% eines Photopolymerisationsinitiators enthält.

17. Photohärtbares Transferblatt nach einem der Ansprüche 1 bis 16, das im Wellenlängenbereich von 380 bis 420 nm eine Lichtdurchlässigkeit von nicht weniger als 70% aufweist.

18. Photohärtbares Transferblatt nach einem der Ansprüche 1 bis 17, das im Wellenlängenbereich von 380 bis 800 nm eine Lichtdurchlässigkeit von nicht weniger als 70% aufweist.

19. Photohärtbares Transferblatt nach einem der Ansprüche 1 bis 18, wobei die photohärtbare Transferschicht eine Dicke von 5 bis 300 µm aufweist.

20. Photohärtbares Transferblatt nach einem der Ansprüche 1 bis 19, wobei auf einer Seite oder beiden Seiten der photohärtbaren Transferschicht eine Trennfolie aufgebracht ist.

21. Photohärtbares Transferblatt nach Anspruch 20, das in Form einer endlosen Bahn vorliegt und annähernd die gleiche Breite wie die Trennfolie hat.

22. Verfahren zur Herstellung eines optischen Informationsaufzeichnungsmediums mit den Schritten (2) bis (4):
einem Schritt (2) zum Entfernen der Trennfolie auf einer Seite des photohärtbaren Transferblatts nach Anspruch 20 oder 21, falls das photohärtbare Transferblatt die Trennfolien auf beiden Seiten aufweist,
einem Schritt (3) zum Auflegen des photohärtbaren Transferblatts auf eine unebene Fläche einer reflektierenden Schicht, so dass die photohärtbare Transferschicht im Kontakt mit der unebenen Fläche ist, wobei die reflektierende Schicht auf einer unebenen Fläche eine Substrats ausgebildet ist, das die unebene Fläche von aufgezeichneten Pits und/oder Rillen aufweist, und Pressen des photohärtbaren Transferblatts und des Substrats, um ein Laminat zu formen, in dem eine Seite des photohärtbaren Transferblatts fest an der unebenen Fläche der reflektierenden Schicht anhaftet, und
einem Schritt (4) zum Entfernen der Trennfolie auf der anderen Seite der photohärtbaren Transferschicht des Laminats.

23. Verfahren zur Herstellung eines optischen Informationsaufzeichnungsmediums nach Anspruch 22,
wobei vor dem Schritt (2) der folgende Schritt (1) durchgeführt wird:
ein Schritt (1) zum Ausstanzen einer Scheibe aus dem photohärtbaren Transferblatt, oder
ein Schritt (1) zum Ausstanzen einer Scheibe mit der photohärtbaren Transferschicht und der Trennfolie auf einer Seite des photohärtbaren Transferblatts aus dem photohärtbaren Transferblatt ohne Ausstanzen der Trennfolie auf der anderen Seite.

24. Verfahren zur Herstellung eines optischen Informationsaufzeichnungsmediums nach Anspruch 22 oder 23,
wobei nach dem Schritt (4) die folgenden Schritte (5) und (6) durchgeführt werden:
ein Schritt (5) zum Auflegen einer unebenen Fläche einer Matrize mit der unebenen Fläche aus aufgezeichneten Pits und/oder Rillen auf die Fläche ohne Trennfolie des Laminats und Pressen des photohärtbaren Transferblatts und der Matrize, um ein Laminat zu formen, in dem die Fläche der photohärtbaren Transferschicht fest an der unebenen Fläche der Matrize anhaftet, und
ein Schritt (6) zum Bestrahlen des Laminats mit der Matrize mit Ultraviolettstrahlung, um die photohärtbare Transferschicht zu härten, und zum Entfernen der Matrize von dem Laminat, um auf der photohärtbaren Transferschicht eine unebene Fläche auszubilden.

25. Verfahren zur Herstellung eines optischen Informationsaufzeichnungsmediums nach Anspruch 24, wobei die Ultraviolettbestrahlung von Schritt (6) mit einer Strahlungsenergie von 300 mJ/cm² ausgeführt wird.

26. Verfahren zur Herstellung eines optischen Informationsaufzeichnungsmediums nach Anspruch 24 oder 25, wobei die nach dem Schritt (6) erhaltene photohärtbare Transferschicht eine Glasübergangstemperatur von nicht weniger als 65°C aufweist.

27. Verfahren zur Herstellung eines optischen Informationsaufzeichnungsmediums nach einem der Ansprüche 24 bis 26,
wobei nach den Schritten (5) und (6) der folgende Schritt (7) durchgeführt wird:
ein Schritt (7) zur Bildung einer reflektierenden Schicht auf der unebenen Fläche der photohärtbaren Transferschicht.

28. Optisches Informationsaufzeichnungsmedium, das durch das Verfahren nach einem der Ansprüche 22 bis 27 hergestellt werden kann.

## Revendications

1. Feuille de transfert photodurcissable possédant une couche de transfert photodurcissable comprenant une composition photodurcissable déformable par l'application d'une pression,
dans laquelle la composition photodurcissable comprend un polymère et un diluant réactif possédant un groupe fonctionnel photopolymérisable et le diluant réactif est un composé représenté par la formule (I) suivante: 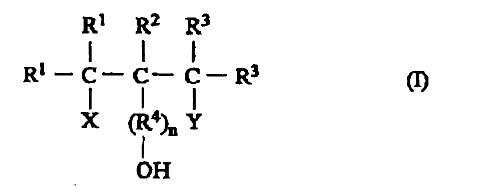 dans laquelle R¹ représente un atome d'hydrogène ou un groupe alkyle possédant de 1 à 5 atomes de carbone et les R¹ peuvent être différents l'un de l'autre,
R² représente un atome d'hydrogène, un groupe alkyle possédant de 1 à 5 atomes de carbone ou un groupe hydroxyalkyle possédant de 1 à 5 atomes de carbone,
R³ représente un atome d'hydrogène ou un groupe alkyle possédant de 1 à 5 atomes de carbone et les R³ peuvent être différents l'un de l'autre,
R⁴ représente un groupe alkylène possédant de 1 à 5 atomes de carbone,
X et Y représentent indépendamment un groupe acryloyle ou un groupe méthacryloyle, et
n est 0 ou 1.

2. Feuille de transfert photodurcissable selon la revendication 1, dans laquelle, dans la formule (I),
R¹ représente un atome d'hydrogène,
R² représente un atome d'hydrogène, un groupe méthyle, un groupe éthyle ou un groupe hydroxyméthyle,
R³ représente un atome d'hydrogène,
R⁴ représente un groupe méthylène,
X et Y représentent indépendamment un groupe acryloyle ou un groupe méthacryloyle, et
n est 0 ou 1.

3. Feuille de transfert photodurcissable selon la revendication 1 ou 2, dans laquelle, dans la formule (I),
R¹ représente un atome d'hydrogène,
R² représente un atome d'hydrogène,
R³ représente un atome d'hydrogène,
X et Y représentent indépendamment un groupe acryloyle ou un groupe méthacryloyle, et
n est 0.

4. Feuille de transfert photodurcissable selon l'une quelconque des revendications 1 à 3, dans laquelle le polymère possède une température de transition vitreuse de pas moins de 80°C.

5. Feuille de transfert photodurcissable selon l'une quelconque des revendications 1 à 4, dans laquelle la couche de transfert photodurcissable qui a été soumise à une exposition ultraviolette de 300 mJ/cm² possède une température de transition vitreuse de pas moins de 65°C.

6. Feuille de transfert photodurcissable selon l'une quelconque des revendications 1 à 5, dans laquelle la composition photodurcissable possède une température de transition vitreuse de moins de 20°C.

7. Feuille de transfert photodurcissable selon l'une quelconque des revendications 1 à 6, dans laquelle le polymère est une résine acrylique.

8. Feuille de transfert photodurcissable selon la revendication 7, dans laquelle la résine acrylique possède au moins 50% en poids d'unité récurrente de méthacrylate de méthyle.

9. Feuille de transfert photodurcissable selon la revendication 7 ou 8, dans laquelle la résine acrylique possède un groupe fonctionnel photopolymérisable.

10. Feuille de transfert photodurcissable selon l'une quelconque des revendications 7 à 9, dans laquelle la résine acrylique est un copolymère de méthacrylate de méthyle, d'au moins un (méth)acrylate d'alkyle dont l'alkyle possède de 2 à 10 atomes de carbone et de (méth)acrylate de glycidyle, le groupe glycidyle étant mis à réagir avec un acide carboxylique possédant un groupe fonctionnel photopolymérisable.

11. Feuille de transfert photodurcissable selon l'une quelconque des revendications 7 à 9, dans laquelle la résine acrylique est un copolymère de méthacrylate de méthyle, d'au moins un (méth)acrylate d'alkyle dont l'alkyle possède de 2 à 10 atomes de carbone et d'un acide carboxylique possédant un groupe fonctionnel photopolymérisable, un groupe carboxyle de l'acide carboxylique étant mis à réagir avec du (méth)acrylate de glycidyle.

12. Feuille de transfert photodurcissable selon la revendication 7 ou 8, dans laquelle la résine acrylique possède un groupe hydroxyle.

13. Feuille de transfert photodurcissable selon l'une quelconque des revendications 7, 8 et 12, dans laquelle la résine acrylique est un copolymère de méthacrylate de méthyle, d'au moins un (méth)acrylate d'alkyle dont l'alkyle possède de 2 à 10 atomes de carbone et d'au moins un (méth)acrylate d'hydroxyalkyle dont l'hydroxyalkyle possède de 2 à 4 atomes de carbone.

14. Feuille de transfert photodurcissable selon l'une quelconque des revendications 1 à 13, dans laquelle la composition photodurcissable contient en outre un diisocyanate.

15. Feuille de transfert photodurcissable selon l'une quelconque des revendications 4 à 14, dans laquelle le polymère possédant une température de transition vitreuse de pas moins de 80°C possède un poids moléculaire moyen en poids de pas moins de 100.000.

16. Feuille de transfert photodurcissable selon l'une quelconque des revendications 1 à 15, dans laquelle la composition photodurcissable contient de 0,1 à 10% en poids d'un initiateur de photopolymérisation.

17. Feuille de transfert photodurcissable selon l'une quelconque des revendications 1 à 16, qui présente un facteur de transmission de la lumière de pas moins de 70% dans le domaine de longueurs d'onde de 380 à 420 nm.

18. Feuille de transfert photodurcissable selon l'une quelconque des revendications 1 à 17, qui présente un facteur de transmission de la lumière de pas moins de 70% dans le domaine de longueurs d'onde de 380 à 800 nm.

19. Feuille de transfert photodurcissable selon l'une quelconque des revendications 1 à 18, dans laquelle la couche de transfert photodurcissable possède une épaisseur de 5 à 300 µm.

20. Feuille de transfert photodurcissable selon l'une quelconque des revendications 1 à 19, dans laquelle une feuille détachable est fournie sur un côté ou les deux côtés de la couche de transfert photodurcissable.

21. Feuille de transfert photodurcissable selon la revendication 20, qui est sous la forme d'une longueur continue et possède une largeur approximativement identique à celle de la feuille détachable.

22. Procédé pour la préparation d'un support d'enregistrement d'informations optique comprenant des étapes (2) à (4):
une étape (2) d'enlèvement de la feuille détachable sur un côté de la feuille de transfert photodurcissable telle que définie dans la revendication 20 ou 21, dans le cas où la feuille de transfert photodurcissable possède les feuilles détachables sur les deux côtés,
une étape (3) de placement de la feuille de transfert photodurcissable sur une surface irrégulière d'une couche réfléchissante, de sorte que la couche de transfert photodurcissable est en contact avec la surface irrégulière, la couche réfléchissante étant formée sur une surface irrégulière d'un substrat possédant la surface irrégulière de creux et/ou de sillons enregistrés, et de serrage de la feuille de transfert photodurcissable et du substrat pour former un laminé dans lequel ce côté de la feuille de transfert photodurcissable adhère étroitement à la surface irrégulière de la couche réfléchissante, et
une étape (4) d'enlèvement de la feuille détachable sur l'autre côté de la couche de transfert photodurcissable du laminé.

23. Procédé pour la préparation d'un support d'enregistrement d'informations optique selon la revendication 22,
dans lequel, avant l'étape (2), l'étape (1) suivante est effectuée:
une étape (1) de découpage d'un disque à partir de la feuille de transfert photodurcissable, ou
une étape (1) de découpage d'un disque comprenant la couche de transfert photodurcissable et la feuille détachable sur un côté de la feuille de transfert photodurcissable à partir de la feuille de transfert photodurcissable sans découpage de la feuille détachable de l'autre côté.

24. Procédé pour la préparation d'un support d'enregistrement d'informations optique selon la revendication 22 ou 23,
dans lequel, après l'étape (4), les étapes (5) et (6) suivantes sont effectuées:
une étape (5) de placement d'une surface irrégulière d'une matrice possédant la surface irrégulière de creux et/ou de sillons enregistrés sur la surface ne possédant pas de feuille détachable du laminé et de serrage de la feuille de transfert photodurcissable et de la matrice pour former un laminé dans lequel la surface de la couche de transfert photodurcissable adhère étroitement à la surface irrégulière de la matrice, et
une étape (6) d'exposition du laminé possédant la matrice à des rayons ultraviolets pour durcir la couche de transfert photodurcissable et d'enlèvement de la matrice à partir du laminé pour former une surface irrégulière sur la couche de transfert photodurcissable.

25. Procédé pour la préparation d'un support d'enregistrement d'informations optique selon la revendication 24, dans lequel l'exposition ultraviolette de l'étape (6) est réalisée en une énergie d'irradiation de 300 mJ/cm².

26. Procédé pour la préparation d'un support d'enregistrement d'informations optique selon la revendication 24 ou 25, dans lequel la couche de transfert photodurcissable obtenue après l'étape (6) possède une température de transition vitreuse de pas moins de 65°C.

27. Procédé pour la préparation d'un support d'enregistrement d'informations optique selon l'une quelconque des revendications 24 à 26,
dans lequel après les étapes (5) et (6), l'étape (7) suivante est effectuée:
une étape (7) de formation d'une couche réfléchissante sur la surface irrégulière de la couche de transfert photodurcissable.

28. Support d'enregistrement d'informations optique pouvant être obtenu par le procédé selon l'une quelconque des revendications 22 à 27.
